# EUROPEAN PATENT SPECIFICATION

(11) **EP 4 220 547 B1**
(45) Date of publication and mention of the grant of the patent: **01.10.2025**
(21) Application number: 21871234.7
(22) Date of filing: 31.08.2021
(51) Int. Cl.: G06V 20/52, G06V 10/10, G06V 10/50, G06V 10/80, H04N 7/18

(54) **METHOD AND APPARATUS FOR DETERMINING HEAT DATA OF GLOBAL REGION, AND STORAGE MEDIUM**
VERFAHREN UND VORRICHTUNG ZUR BESTIMMUNG VON WÄRMEDATEN EINER GLOBALEN REGION UND SPEICHERMEDIUM
PROCÉDÉ ET APPAREIL DE DÉTERMINATION DES DONNÉES DE CHALEUR DE LA RÉGION GLOBALE ET SUPPORT DE STOCKAGE

(30) Priority: 25.09.2020 CN 202011025551
(43) Date of publication of application: 02.08.2023
(73) Proprietor: Hangzhou Hikvision Digital Technology Co., Ltd., Hangzhou, Zhejiang 310051 (CN)
(72) Inventor: XIN, Rui, Hangzhou, Zhejiang 310051 (CN)
(74) Representative: Goddar, Heinz J.
(86) International application number: PCT/CN2021/115844
(87) International publication number: WO 2022/062862

(56) References cited:
- CN-A- 109 285 118
- CN-A- 109 360 145
- CN-A- 110 651 287
- CN-A- 111 290 001
- CN-A- 111 352 092
- CN-A- 112 102 307
- US-A1- 2010 148 066
- US-B1- 10 009 551
- OLAGOKE ADESHINA SIRAJDIN ET AL: "Literature Survey on Multi-Camera System and Its Application", IEEE ACCESS, IEEE, USA, vol. 8, 17 September 2020 (2020-09-17), pages 172892 - 172922, XP011811696, DOI: 10.1109/ACCESS.2020.3024568
- PANDEY ACHALA ET AL: "Image mosaicing: A deeper insight", IMAGE AND VISION COMPUTING, ELSEVIER, GUILDFORD, GB, vol. 89, 2 August 2019 (2019-08-02), pages 236 - 257, XP085809155, ISSN: 0262-8856, [retrieved on 20190802], DOI: 10.1016/J.IMAVIS.2019.07.002

## Description

### TECHNICAL FIELD

Embodiments of this application relate to the field of image processing techniques, in particular to a method and an apparatus for determining hot data in a global region, and a storage medium.

### BACKGROUND

At present, image acquisition devices can be deployed in some public regions for video monitoring. However, due to a limited monitoring range of one single image acquisition device, users cannot effectively determine hot data in a global region through the image acquisition device. Based on this, it is desired to provide a method for determining hot data in a global region, so that users can conveniently determine hot spots in a global range.

US 10009551B1 discloses image processing for merging images of a scene captured with differing camera parameters.

### SUMMARY

The invention is defined by the method and the apparatus according to the independent claims. Preferred embodiments are defined in the dependent claims.

The embodiments of this application provides a method and an apparatus for determining hot data in a global region and a storage medium, which can more accurately determine hot data in a global region.

The technical solutions provided by the embodiments of the present application may include at least the following beneficial effects.

In the embodiments of the present application, the global region is monitored by a plurality of image acquisition devices, and according to the hot data in the monitoring sub-region of each image acquisition device, the hot data in the global region is displayed. This solves the problem that the hot data in the global region cannot be obtained due to the limited monitoring range of one single image acquisition device. In addition, in the present application, an overlapping monitoring region of adjacent image acquisition devices can be determined according to the monitoring sub-region of each image acquisition device in the global region. And then the hot data in the overlapping monitoring region is determined according to the hot data of the adjacent image acquisition devices. On this basis, according to the hot data in the overlapping coverage region, more accurate hot data in the global region can be obtained, which is conducive to the user's intuitive identification of hot regions based on the hot data in the global region.

### BRIEF DESCRIPTION OF THE DRAWINGS

In order to more clearly illustrate the technical solutions in the embodiments of the present application, the drawings used in the description of the embodiments will be briefly described below. It is obvious that the drawings in the following description are only some examples of the present application, and those of ordinary skill in the art may also obtain other drawings based on these drawings without making creative work.
FIG. 1 is a schematic diagram illustrating deployment of an image acquisition device according to an embodiment of the present application.
Fig. 2 is a diagram illustrating an implementation environment where a method for determining hot data in a global region is applied according to an embodiment of the present application.
Fig. 3 is a flowchart illustrating a method for determining hot data in a global region according to an embodiment of the present application.
Fig. 4 is a schematic diagram illustrating principles of determining an actual monitoring range of an image acquisition device according to an embodiment of the present application.
Fig. 5 is another schematic diagram illustrating principles of determining an actual monitoring range of an image acquisition device according to an embodiment of the present application.
Fig. 6 is another schematic diagram illustrating principles of determining an actual monitoring range of an image acquisition device according to an embodiment of the present application.
Fig. 7 is a schematic diagram illustrating an overlapping monitoring region of adjacent image acquisition devices according to an embodiment of the present application.
Fig. 8 is a schematic structural diagram illustrating an apparatus for determining hot data in a global region according to an embodiment of the present application.
Fig. 9 is a schematic structural diagram illustrating a computer device for determining hot data in a global region according to an embodiment of the present application.

### DETAILED DESCRIPTION OF THE EMBODIMENTS

For purposes, technical solutions and advantages of the present application to be clearer, embodiments of the present application will be described in further detail below with reference to the accompanying drawings.

Before the detailed explanation of a method for determining hot data in a global region provided by the embodiments of the present application, the application scenarios related to the embodiments of the present application are introduced.

At present, in some places such as large shopping malls, supermarkets or the like, image acquisition devices are usually deployed for video monitoring. However, due to the limited monitoring range of one single image acquisition device, users cannot effectively and intuitively view the hot data in the global region through the image acquisition device. Based on this, multiple image acquisition devices can be deployed for all-round video monitoring of the region. However, when multiple image acquisition devices are deployed in a global region, there may be an overlapping monitoring region between the monitoring regions of adjacent image acquisition devices. And the two image acquisition devices which have an overlapping monitoring region operate independently. In this way, after acquiring hot data in their respective monitoring regions, the two image acquisition devices will respectively perform data processing such as smoothing, regularizing the data or the like on hot data in their own monitoring regions, which will lead to different hot data from the two image acquisition devices in the overlapping monitoring region. On this basis, after the hot data of each sub-region is superimposed on display by a computer device, different hot color blocks will be superimposed in the overlapping monitoring region between two image acquisition devices, which will result in the users not being able to intuitively identify effective hot regions through hot data.

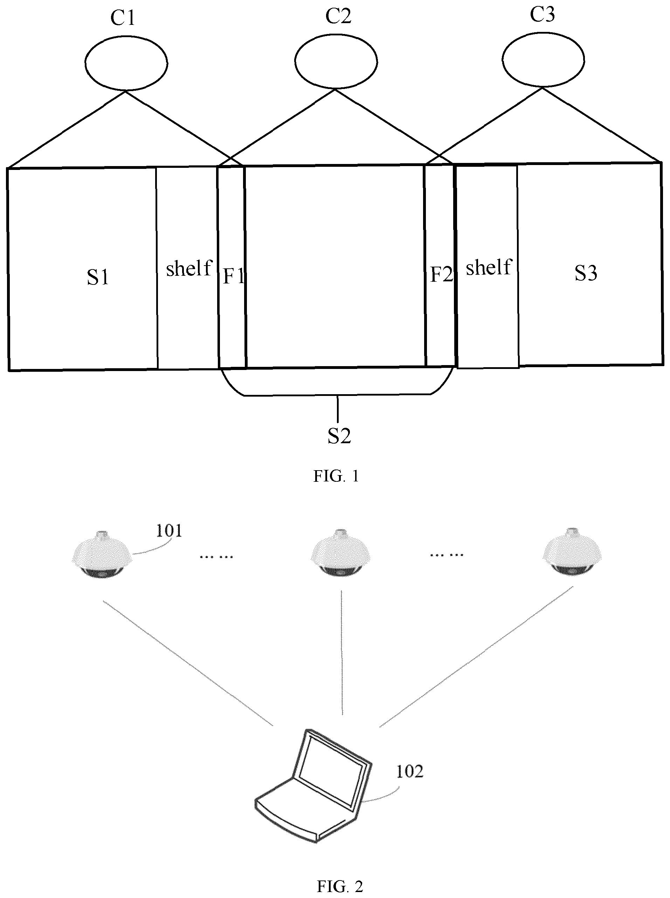

For example, referring to Fig. 1, in a shelf region of a supermarket, one image acquisition device is deployed between every two adjacent shelves to conduct video monitoring on the region between the two shelves. Since the monitoring region of the image acquisition device may be larger than the distance between two adjacent shelves, there may be an overlapping region between the monitoring regions of two adjacent image acquisition devices. As shown in Fig. 1, the monitoring region of an image acquisition device C1 is S1+F1, the monitoring region of an image acquisition device C2 is S2, and the monitoring region of an image acquisition device C3 is S3+F2. It can be seen that there is an overlapping region F1 between the monitoring regions of the image acquisition device C1 and C2 and an overlapping region F2 between the monitoring regions of the image acquisition device C3 and C2. In this case, when there is a need to display the hot data of the whole shelf region, it can be achieved by the method for determining hot data in a global region provided by the embodiments of the present application. In the method, it is possible to avoid the superposition of hot color blocks of the overlapping region F1 and F2 due to the different hot data from different image acquisition devices.

An implementation environment related to a method for determining hot data in a global region provided by the embodiments of the present application is described in the following.

Fig. 2 is an implementation environment diagram provided by an embodiment of the present application. As shown in Fig. 2, the implementation environment includes a plurality of image acquisition devices 101 and a computer device 102. Each of the plurality of image acquisition devices 101 builds a communication connection with the computer device 102.

It should be noted that the plurality of image acquisition devices 101 are image acquisition devices deployed in a global region to be monitored. Each image acquisition device 101 is used for image acquisition of its own monitoring region, and performs hot data statistics based on the acquired images. After that, the statistical hot data is sent to the computer device 102. The hot data may be data that can reflect the level of interest of the region such as the number of persons appearing in the monitoring region of the image acquisition device 101 and/or the durations of the persons staying in the monitoring region during a certain time period. That is, the hot data in the monitoring region corresponding to each image acquisition device indicate data that can reflect the level of interest of the monitoring region, for example, data reflecting the number of persons appearing in the monitoring region and/or the durations of persons staying in the monitoring region.

Optionally, in some possible implementations, each image acquisition device 101 may send acquired images to the computer device 102 or other devices by which hot data statistics is performed based on the acquired images.

The computer device 102 may receive the hot data of the same time period reported by each image acquisition device 101. In an example, the computer device 102 may receive the hot data of the same time period reported by other devices. In an example, based on the images acquired during the same time period reported by each image acquisition device, the computer device 102 may perform statistics to obtain hot data of each image acquisition device 101 for the corresponding time period. Thereafter the computer device 102 can determine, based on the obtained hot data of each image acquisition device 101 for the corresponding time period, through the method for determining hot data in a global region provided by the embodiment of the present application, the hot data in the global region. In a possible implementation, determining the hot data in the global region may indicate generating a heat map in the global region, in which different hot data are represented by different hot color values. Optionally, in other possible implementations, determining the hot data in the global region may also indicate acquiring hot data in a global region, which is not limited to the embodiment of the present application.

The image acquisition device 101 may be a device with image acquisition function and certain data processing capability. For example, the image acquisition device 101 may be an ordinary camera or a fisheye camera with certain data processing capability, which is not limited to the embodiment of this application.

The computer device 102 may be a computer device with data processing capability deployed in the global region. In an example, the image acquisition device 102 may be a cloud computer device, which is not limited to the embodiment of this application.

A method for determining hot data in a global region provided by the embodiments of the present application is described in the following details.

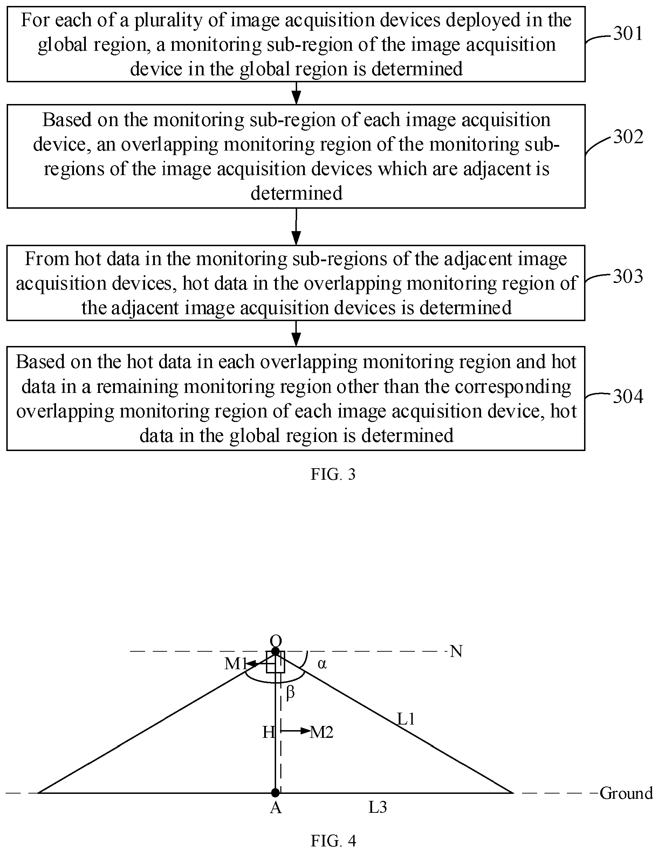

Fig. 3 is a flowchart illustrating a method for determining hot data in a global region according to an embodiment of the present application, and the method is applied to the computer device shown in Fig. 2. Referring to Fig. 3, the method includes the following steps.

At step 301, for each of a plurality of image acquisition devices deployed in the global region, a monitoring sub-region of the image acquisition device in the global region is determined.

The global region indicates the whole region to be monitored. In order for all-round monitoring on the global region, a plurality of image acquisition devices are deployed in the global region.

In a possible implementation provided by the embodiment of the present application, a global region map may be stored in a computer device and refers to a plan corresponding to the global region. Based on this, the computer device may acquire an actual monitoring range of each image acquisition device in a plurality of image acquisition devices deployed in the global region and based on the actual monitoring range of each image acquisition device and the mounting position of each image acquisition device in the global region map, a monitoring sub-region of the corresponding image acquisition device in the global region map is determined.

Take any one of the plurality of image acquisition devices as an example, and for convenience in description, the image acquisition device is referred to as a first image acquisition device. The computer device may acquire a first field of view (FOV) and a first distance corresponding to the first image acquisition device. Based on the first field of view and the first distance, an actual monitoring range of the first image acquisition device is determined. Then based on the actual monitoring range of the first image acquisition device and the mounting position of the first image acquisition device in the global region map, a monitoring sub-region corresponding to the first image acquisition device in the global region map is determined. The first distance is the height of the first image acquisition device from the ground or the distance between a point indicating a photographing boundary on the ground (also referred to boundary point below) photographed by the first image acquisition device at the first field of view and the first image acquisition device.

It should be noted that the first image acquisition device can identify the first field of view and the first distance of the first image acquisition device through a built-in algorithm and a gravity sensor, and report the first field of view and the first distance to the computer device. Accordingly, the computer device can receive the first field of view and the first distance reported by the first image acquisition device.

If the first image acquisition device is mounted in a top-mounted manner, i.e., the first image acquisition device is mounted on a first plane parallel to the ground, for example, on a ceiling, and the angle between the central axis of the first image acquisition device and the normal to the first plane is 0°, i.e., the mounting angle of the first image acquisition device is 0°, the first image acquisition device can measure the first field of view of the first image acquisition device by a built-in algorithm and a gravity sensor. In addition, the first image acquisition device can acquire images at the first field of view. Based on the acquired images, the distance between the first image acquisition device and the boundary point photographed by the first image acquisition device at the first field of view can be determined by a video ranging algorithm and the distance can be determined as the first distance.

For example, referring to Fig. 4, N represents the first plane, the first image acquisition device is located on a point O, the angle between the central axis M1 of the first image acquisition device and the normal M2 to the first plane is 0°, the first field of view of the first image acquisition device is β as shown in the figure, and the first distance measured according to the images acquired by the first image acquisition device at the first field of view β is L1.

Optionally, in some possible implementations, the first image acquisition device may also directly take the height of the first image acquisition device from the ground as the first distance. In this case, as shown in Fig. 4, the first distance is H.

In an example, if the first image acquisition device is mounted in a top-mounted manner and the angle between the central axis M1 of the first image acquisition device and the normal M2 to the first plane is not 0°, i.e., the mounting angle of the first image acquisition device is not 0°, the first image acquisition device can measure a first field of view and a mounting angle of the first image acquisition device by a built-in algorithm and a gravity sensor. In addition, the first image acquisition device can acquire images at the first field of view and the mounting angle. Based on the acquired images, by a video ranging algorithm, the distance between the mounting position of the first image acquisition device and a first boundary point photographed by the first image acquisition device at the first field of view can be determined, and the distance between the mounting position of the first image acquisition device and a second boundary point photographed by the first image acquisition device at the first field of view can be determined. The two obtained distances are both taken as the first distance.

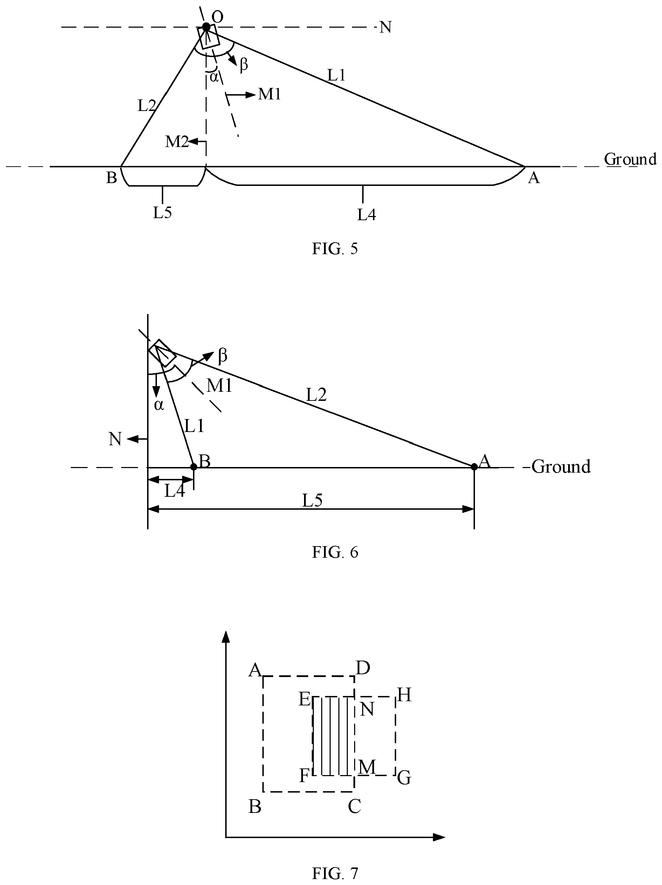

For example, referring to Fig. 5, N represents the first plane, the first image acquisition device is located on a point O, the angle between the central axis M1 of the first image acquisition device and the normal M2 to the first plane is α, the first field of view of the first image acquisition device is β as shown in the figure, and the first distance measured according to the images acquired by the first image acquisition device at the first field of view β includes L1 and L2.

If the first image acquisition device is mounted in a side-mounted manner, i.e., the first image acquisition device is mounted on a second plane perpendicular to the ground, for example, on a wall perpendicular to the ground, and the angle between the central axis of the first image acquisition device and the second plane is α, i.e., the mounting angle of the first image acquisition device is α, the first image acquisition device can determine a first field of view and a mounting angle of the first image acquisition device by a gravity sensor and a built-in algorithm. In this case, the first image acquisition device can acquire images at the first field of view. Based on the acquired images, by a video ranging algorithm, the distance between a mounting position of the first image acquisition device and a first boundary point photographed by the first image acquisition device at the first field of view can be determined, and the distance between the mounting position of the first image acquisition device and a second boundary point photographed by the first image acquisition device at the first field of view can be determined. The two distances are taken as the first distance.

For example, referring to Fig. 6, N represents the second plane, the angle between the central axis M1 of the first image acquisition device and the second plane is α, the first field of view of the first image acquisition device is β as shown in the figure (α is greater than half of the first field of view β in this case), and the first distance measured according to the images acquired by the first image acquisition device at the first field of view β includes L1 and L2. In a case where α is less than half of the first field of view β, it can be understood that the first image acquisition device can photograph what is directly below its mounting position. And the distance between the mounting position of the first image acquisition device and a boundary point photographed by the first image acquisition device at the first field of view can be determined as a first distance, where the boundary point is a boundary point other than a position point directly below the mounting position of the first image acquisition device. Optionally, in some possible implementations, the first image acquisition device may also directly take the height of the first image acquisition device from the ground as the first distance.

After obtaining the first field of view and the first distance, the first image acquisition device can report the first field of view and the first distance to a computer device. The computer device can determine, based on the first field of view and the first distance, an actual monitoring range of the first image acquisition device.

Optionally, in some possible implementations, the first field of view and the first distance can also be sent to the computer device by other devices. In another example, the first field of view and the first distance can be statically configured on the computer device. The above-mentioned implementation where the first field of view and the first distance are measured and reported by the first image acquisition device to the computer device is only a possible implementation for the computer device to acquire the first field of view and the first distance, which should not constitute a limitation on the embodiment of the present application.

After acquiring the first field of view and the first distance, the computer device can determine, based on the first field of view and the first distance, an actual monitoring range of the first image acquisition device.

If the first image acquisition device is mounted in a top-mounted manner and the mounting angle is 0°, the computer device can determine a second distance based on the first field of view and the first distance, and can determine a circular region as an actual monitoring range of the first image acquisition device, where the circular region is formed on the ground with the position point on the ground directly below the first image acquisition device as the center and the second distance as the radius of the circle.

Still taking Fig. 4 as an example, if the first distance is L1, the computer device can calculate, based on the first field of view β and the first distance L1, the second distance L3 by the following formula: L3=L1*sin (0.5*β). If the first distance is H, the computer device can calculate, based on the first field of view β and the first distance H, the second distance L3 by the following formula: L3=H*tan (0.5*β). After determining the second distance L3, an actual monitoring range of the first image acquisition device is the circular region formed on the ground with the position point A directly below the first image acquisition device as the center and the second distance L3 as the radius of the circle.

If the first image acquisition device is mounted in a top-mounted manner and the mounting angle is α, the computer device can determine two second distances based on the first field of view, two first distances and mounting angle, and can determine an actual monitoring range of the first image acquisition device based on the determined two second distances.

Still taking Fig. 5 as an example, the two first distances are L1 and L2. Then based on the first distance L1, the first field of view β and the mounting angle α, a second distance L4 is obtained by the following formula: L4= L1*sin (0.5*β+α). And then based on the first distance L2, the first field of view β and the mounting angle α, another second distance L5 is obtained by the following formula: L2*sin (0.5*β-α). In another example, if the first distance is the height H of the first image acquisition device from the ground, based on the height H, the first field of view β and the mounting angle α, a second distance L4 is obtained by the following formula: L4=H*tan (0.5*β+α), and another second distance L5 is obtained by the following formula: L5= H*tan (0.5*β-α). Then, the computer device can determine a circular or quasi-circular region as an actual monitoring range of the first image acquisition device, where the circular or quasi-circular region is formed on the ground with a midpoint of a first boundary point A and a second boundary point B as the center and the 0.5*(L4+ L5) as the radius of the circle.

If the first image acquisition device is mounted in a side-mounted manner and the mounting angle is α, the computer device can determine a second distance based on the first field of view, mounting angle and determined first distance, and can determine an actual monitoring range of the first image acquisition device based on the determined second distance.

Still taking Fig. 6 as an example, the two first distances are L1 and L2. Then based on the first distance L1, the first field of view β and the mounting angle α, a second distance L4 is obtained by the following formula: L4= L1*sin (α-0.5*β). And then based on the first distance L2, the first field of view β and the mounting angle α, another second distance L5 is obtained by the following formula: L2*sin (0.5*β+α). In another example, if the first distance is the height H of the first image acquisition device from the ground, based on the height H, the first field of view β and the mounting angle α, a second distance L4 is obtained by the following formula: L4=H*tan (α-0.5*β), and another second distance L5 is obtained by the following formula: L5= H*tan (0.5*β+α). Then, the computer device can determine a circular or quasi-circular region as an actual monitoring range of the first image acquisition device, where the circular or quasi-circular region is formed on the ground with a midpoint of a first boundary point A and a second boundary point B as the center and the 0.5*(L5-L4) as the radius of the circle.

Fig. 6 illustrates a case where the first image acquisition device is mounted in a side-mounted manner and α is greater than half of the first field of view β. If α is less than half of the first field of view β, it can be understood that the first image acquisition device can photograph what is directly below its mounting position. And the distance between the mounting position of the first image acquisition device and a boundary point photographed by the first image acquisition device at the first field of view can be determined as a first distance L1, where the boundary point is a boundary point other than a position point directly below its mounting position. Then a second distance L4 can be determined by the following formula: L4=L1*sin (0.5*β+α). If the first distance is the height H of the first image acquisition device from the ground, a second distance L4 can be determined by the following formula: L4=H*tan (0.5*β+α). The computer device can determine a circular or quasi-circular region as an actual monitoring range of the first image acquisition device, where the circular or quasi-circular region is formed on the ground with a center point directly below the mounting position of the first image acquisition device as the center and the 0.5* L4 as the radius of the circle.

If the first image acquisition device is mounted in a side-mounted manner and the central axis of the image acquisition device is perpendicular to the wall, i.e., α=90°, the distance between the mounting position of the first image acquisition device and a boundary point photographed by the first image acquisition device at the first field of view can be determined as a first distance L1, and a second distance L4 can be determined by the following formula: L4= L1*sin (α-0.5*β). In another example, the height H of a mounting position of the first image acquisition device from the ground is determined as the first distance, and a second distance L4 can be determined by the following formula: L4= H*tan (α-0.5*β). A first position point whose distance from the position point directly below the first image acquisition device is a second distance is determined, and the range beyond the first position point is taken as an actual monitoring range of this first image acquisition device.

In addition, in an embodiment of the present application, the computer device may acquire an actual mounting position of the first image acquisition device and based on the actual mounting position of the first image acquisition device, a mounting position of the first image acquisition device in the global region map is calibrated. After that, the computer device may determine, based on the actual monitoring range and the mounting position of the first image acquisition device in the global region map, a monitoring sub-region of the first image acquisition device in a global region map.

It should be noted that the actual mounting position of the first image acquisition device can be pre-stored in the computer device or can be reported by the image acquisition device per se, which is not limited to the embodiments of this application. In addition, the actual mounting position of the first image acquisition device can be represented by a position coordinate of the first image acquisition device in the global region. And there is a one-to-one correspondence between image coordinates in the global region map stored in the computer device and actual position coordinates in the global region. Based on this, the computer device can determine an image coordinate of the first image acquisition device in a global region map according to an actual mounting position coordinate of the first image acquisition device in the global region, thereby realizing the position calibration of the first image acquisition device in the global region map.

After determining the actual monitoring range and the mounting position of the first image acquisition device in the global region map, using the mounting position of the first image acquisition device in the global region map as a base point, based on the actual monitoring range determined above and the scale of the global region map, a monitoring sub-region of the first image acquisition device in a global region map can be obtained. The mounting position of the first image acquisition device in the global region map is a position point in the global region map corresponding to a position point directly below the first image acquisition device in the real world.

For example, taking the first image acquisition device mounted in a top-mounted manner shown in Fig. 4 as an example, based on the scale of the global region map, the second distance L3 is converted to an image distance in the global region map. After that, a circular region determined by taking the mounting position of the first image acquisition device in the global region map as the center and the converted image distance as the radius of the circle can be the monitoring sub-region of this first image acquisition device in the global region map.

Taking the first image acquisition device as an example, the above describes the implementation procedure of determining the monitoring sub-region of a device in the global region map. For each image acquisition device in a plurality of image acquisition devices, the above method can be used to determine a monitoring sub-region of the corresponding device in the global region map, which will not be described herein in the embodiments of this application.

The above describes the implementation procedure of determining the monitoring sub-region of each device in the global region map. In another possible implementation, the computer device may acquire an actual monitoring range of each image acquisition device in a plurality of image acquisition devices deployed in the global region and based on the actual monitoring range and the mounting position of each image acquisition device, a monitoring sub-region of the corresponding image acquisition device in a global region map is determined. That is, in this implementation, the computer device may directly determine, based on the actual monitoring range and the mounting position of each image acquisition device, a monitoring sub-region of each image acquisition device in the global region in the real world. In this case, the monitoring sub-region is represented by the position coordinates in the real world. In another example, the computer device may determine, based on the actual monitoring range and the mounting position of each image acquisition device, a monitoring sub-region of each image acquisition device in the global region under the reference coordinate system. The monitoring sub-region can also be represented by the position coordinates in the reference coordinate system.

It should be noted that in this implementation, the actual monitoring range of each image acquisition device can be determined by referring to the implementation for determining the actual monitoring range of the image acquisition device in the first implementation method described above, which will not be described herein in the embodiments of this application.

Different from the first implementation mentioned above, in this implementation, after determining the actual monitoring range, there is no need to convert the coordinates between the world coordinate system and the image coordinate system, i.e., there is no need to calibrate the mounting position of the image acquisition device in the global region map according to the actual mounting position of the image acquisition device, and there is no need to convert the actual monitoring range into the global region map according to the image scale. And based on the actual mounting position and actual monitoring range, a monitoring sub-region of the image acquisition device in a global region map can be obtained directly.

At step 302, based on the monitoring sub-region of each image acquisition device, an overlapping monitoring region of the monitoring sub-regions of the image acquisition devices which are adjacent is determined.

After determining the monitoring sub-region of each image acquisition device, the computer device can determine, based on the monitoring sub-region of each image acquisition device, an overlapping monitoring region of adjacent image acquisition devices.

The computer device can determine, based on the monitoring sub-region of each image acquisition device, the image acquisition devices which are adjacent image acquisition devices. In another example, the computer device can determine, based on the coordinates of the position points contained in the monitoring sub-region of each image acquisition device, the image acquisition devices which are adjacent image acquisition devices.

Taking any two adjacent image acquisition devices as examples, for ease of description, the two adjacent image acquisition devices are referred to as a first image acquisition device and a second image acquisition device. The computer device acquires coordinates of each position point in the first monitoring sub-region of the first image acquisition device and coordinates of each position point in the second monitoring sub-region of the second image acquisition device. And the region formed by position points with the same coordinates in the first monitoring sub-region and the second monitoring sub-region is used as the overlapping monitoring region of the first image acquisition device and the second image acquisition device.

It should be noted that, if the monitoring sub-region of each image acquisition device refers to the monitoring sub-region of each image acquisition device in the global region map, a coordinate of each pixel in the global region map can be taken as a coordinate of a position point, i.e., the position points in the monitoring sub-region of the image acquisition device in the global region map can refer to the pixels in the monitoring sub-region in the global region map. In this case, if there are pixels with the same coordinates in the first monitoring sub-region and in the second monitoring sub-region, it can indicate that the first monitoring sub-region and the second monitoring sub-region have the same pixels, and the region formed by these same pixels included in both the first monitoring sub-region and the second monitoring sub-region is the intersection region of the first monitoring sub-region and the second monitoring sub-region, i.e., the overlapping monitoring region of the first image acquisition device and the second image acquisition device.

For example, referring to Figure 7, the monitoring sub-region of the first image acquisition device obtained by mapping the actual monitoring range of the first image acquisition device to the global region map is a quadrilateral ABCD, and the monitoring sub-region of the second image acquisition device obtained by mapping the actual monitoring range of the second image acquisition device to the global region map is a quadrilateral EFGH. As seen in Figure 7, the pixels in the quadrilateral EFMN are located in both the monitoring sub-region of the first image acquisition device and the monitoring sub-region of the second image acquisition device, so the quadrilateral EFMN is an overlapping monitoring region of the first image acquisition device and the second image acquisition device.

Of course, if there are no pixels with the same coordinates in the first monitoring sub-region and in the second monitoring sub-region, it indicates that there is no intersection region between these two monitoring sub-regions, i.e., there is no overlapping monitoring region between these two adjacent image acquisition devices.

For adjacent image acquisition devices in a plurality of image acquisition devices, the computer device can refer to the above method to determine the possible overlapping monitoring region between adjacent image acquisition devices, which will not be described herein in the embodiments of this application.

In an example, if the monitoring sub-region of each image acquisition device refers to the monitoring sub-region of each image acquisition device in the global region, the computer device may likewise determine the overlapping monitoring region between two adjacent image acquisition devices with reference to the above implementation. Unlike the above implementation, in this case the coordinates of the position points used to determine the overlapping monitoring region may refer to the position coordinates in the global region of the real world. In an example, the coordinates of the position points used to determine the overlapping monitoring region may also refer to the position coordinates in the global region under the reference coordinate system.

At step 303, from hot data in the monitoring sub-regions of the adjacent image acquisition devices, hot data in the overlapping monitoring region of the adjacent image acquisition devices is determined.

In the embodiment of this application, each image acquisition device acquires images in its own actual monitoring range in real time, and according to a certain period, the hot data statistics of the monitoring range within the period is performed based on the images collected within the period. After that, each image acquisition device may report the statistical hot data in its own monitoring range in the same period to the computer device. In this case, the hot data reported by each image acquisition device is the hot data in the monitoring sub-region of the corresponding image acquisition device in the global region. It should be noted that the hot data reported by each image acquisition device includes a plurality of hotness values, each of which is used to represent the hotness in a region in the actual monitoring range of the corresponding image acquisition device, i.e., each hotness value corresponds to a region in the actual monitoring range. If the monitoring sub-region of the image acquisition device indicates a monitoring sub-region in the global region map, one region in the actual monitoring range of an image acquisition device may correspond to one pixel unit in the monitoring sub-region of the image acquisition device in the global region map, i.e., each hotness value in the hot data may correspond to one pixel unit in the monitoring sub-region of the image acquisition device in the global region map. The pixel unit may be a unit formed by one or more pixels. For example, if the hot data indicates the number of persons, the hot data in the monitoring sub-region of this image acquisition device in the global region map will include the number of persons appearing in each pixel unit in this monitoring sub-region.

In this way, for adjacent image acquisition devices with an overlapping monitoring region, since both of the adjacent image acquisition devices perform hot data statistics for the overlapping monitoring region, the overlapping monitoring region will correspond to two pieces of hot data. However, since each image acquisition device operates independently, the statistical data of each image acquisition device is also generated independently by the image acquisition device per se. For example, each image acquisition device may independently perform data processing such as smoothing, regularization the data or the like on the hot data in its own monitoring sub-region, which will lead to possibly different hot data in this overlapping monitoring region obtained by two adjacent image acquisition devices. Based on this, the computer device may select hot data in the overlapping monitoring region of two adjacent image acquisition devices from hot data in the monitoring sub-region respectively reported by the two adjacent image acquisition devices.

Optionally, in some possible cases, images acquired by each image acquisition device can also be processed by other processing devices to obtain hot data in the monitoring sub-region of each image acquisition device, and the hot data in the monitoring sub-region of each image acquisition device can be sent to the computer device. In another example, images acquired by each image acquisition device can be directly processed by the computer device to obtain hot data in the monitoring sub-region of each image acquisition device. The implementation is not limited to the embodiments of this application.

Still take two adjacent image acquisition devices as a first image acquisition device and a second image acquisition device as an example to illustrate in the following.

The computer device divides an overlapping monitoring region of the first image acquisition device and the second image acquisition device into a plurality of overlapping sub-regions. Based on the position of each overlapping sub-region, hot data in the corresponding overlapping sub-region is determined from hot data in the first monitoring sub-region of the first image acquisition device and hot data in the second monitoring sub-region of the second image acquisition device.

In a case where the above-mentioned monitoring sub-regions and overlapping monitoring region of the image acquisition devices refer to regions in the global region map, if the part of the first monitoring sub-region other than the overlapping monitoring region and the part of the second monitoring sub-region other than the overlapping monitoring region are located on the upper and lower sides of the overlapping monitoring region, the computer device will take each row of pixels in the overlapping monitoring region as an overlapping sub-region. In another example, every two or more rows of pixels in the overlapping monitoring region can also be taken as an overlapping sub-region, which is not limited in the embodiments of this application. If the part of the first monitoring sub-region other than the overlapping monitoring region and the part of the second monitoring sub-region other than the overlapping monitoring region are located on the left and right sides of the overlapping monitoring region, the computer device will take each column of pixels in the overlapping monitoring region as an overlapping sub-region. In another example, every two or more columns of pixels in the overlapping monitoring region can also be taken as an overlapping sub-region, which is not limited in the embodiments of this application.

If the above-mentioned monitoring sub-regions and overlapping monitoring region of the image acquisition devices refer to monitoring regions in the real world, the plurality of overlapping sub-regions divided above can be a plurality of sub-regions in the real world. In this case, the computer device can perform a division of overlapping sub-regions according to a unit region corresponding to each hotness value in the overlapping monitoring region, i.e., a small region corresponding to a hotness value is taken as a minimum unit region. And the computer device can divide the overlapping monitoring region to obtain a plurality of overlapping sub-regions each of which includes one or more unit regions. Optionally, in some possible implementations, the computer device can also convert the monitoring sub-regions and the overlapping sub-region of the image acquisition devices to regions under a reference coordinate system, and then divide the overlapping monitoring region under the reference coordinate system according to a certain region size to obtain a plurality of overlapping sub-regions.

After dividing the overlapping monitoring region into a plurality of overlapping sub-regions, for each overlapping sub-region in the plurality of overlapping sub-regions, take a first overlapping sub-region as an example, the computer device obtains first hot data in the first overlapping sub-region from the hot data in the first monitoring sub-region, and obtains second hot data in the first overlapping sub-region from the hot data in the second monitoring sub-region. If the overlapping sub-regions are regions in the global region map, one overlapping sub-region may include one or more pixel units. So, it is known from the previous description that the hot data in the overlapping sub-region will include a hotness value of each pixel unit included in the overlapping sub-region. If the overlapping sub-regions are regions in the real world or under a reference coordinate system, one overlapping sub-region may include one or more unit regions, each of which corresponds to a hotness value. So, the hot data in the overlapping sub-region will include a hotness value of each unit region included in the overlapping sub-region.

After obtaining two pieces of hot data of the two image acquisition devices in the first overlapping sub-region, the computer device determines a target sub-region that is close to a position of the first overlapping sub-region from the first monitoring sub-region and the second monitoring sub-region. And the computer device determines a first dispersion between the first hot data and hot data in the target sub-region, and determines a second dispersion between the second hot data and the hot data in the target sub-region. Based on the first dispersion and the second dispersion, the computer device determines hot data in the first overlapping sub-region.

The computer device can take one of a first remaining region or a second remaining region that is closer to the position of the first overlapping sub-region as the target sub-region, where the first remaining region is a remaining part of the first monitoring sub-region other than the overlapping monitoring region and the second remaining region is a remaining part of the second monitoring sub-region other than the overlapping monitoring region. That is, if the first overlapping sub-region is closer to the first remaining region, the first remaining region can be taken as the target sub-region. If the first overlapping sub-region is closer to the second remaining region, the second remaining region can be taken as the target sub-region.

In an example, if the overlapping sub-region is divided by rows of pixels, the computer device can calculate a distance between a designated row of pixels in the first overlapping sub-region and a row of pixels closest to the overlapping monitoring region in the first remaining region as a distance between the first overlapping sub-region and the first remaining region. And the computer device can calculate a distance between the designated row of pixels and a row of pixels closest to the overlapping monitoring region in the second remaining region as a distance between the first overlapping sub-region and the second remaining region. After that, the computer device can compare the two calculated distances, and determine the remaining region with a smaller distance from the first overlapping sub-region as the target sub-region close to the first overlapping sub-region.

In an example, if the pixel region is divided by columns of pixels, the way to determine which remaining region is close to the first overlapping sub-region is similar to the above-mentioned implementation when it is divided by rows of pixels, the difference mainly lies in replacing the rows of pixels in the above-mentioned implementation with the columns of pixels, which will not be described herein in the embodiments of this application.

If the overlapping sub-region is divided according to a unit region in the overlapping monitoring region in the real world, or according to a unit region in the overlapping monitoring region in the reference coordinate system, the target sub-region can also be determined by referring to the principles of the above-mentioned implementation, which will not be described herein in the embodiments of this application.

After the target sub-region close to the first overlapping sub-region is determined from the first monitoring sub-region and the second monitoring sub-region in the above-mentioned manner, the computer device can calculate a dispersion between the first hot data in the first overlapping sub-region and the hot data in a first region close to the first overlapping sub-region in the target sub-region to obtain a first dispersion. And the computer device can calculate a dispersion between the second hot data in the first overlapping sub-region and the hot data in the first region to obtain a second dispersion.

If the first overlapping sub-region is divided by rows of pixels, the first region may indicate a region formed by n rows of pixels in the target sub-region, the n rows starting from a row of pixels closest to the first overlapping sub-region and towards a direction away from the first overlapping sub-region. The n is equal to the number of rows of pixels included in the first overlapping sub-region. For example, assuming that the first overlapping sub-region includes two rows of pixels, a pixel region formed by two rows of pixels starting from a row of pixels closest to the first overlapping sub-region and towards a direction away from the first overlapping sub-region is the first region. If the first overlapping sub-region is divided by columns of pixels, the first region may indicate a region formed by n columns of pixels in the target sub-region, the n columns starting from a column of pixels closest to the first overlapping sub-region and towards a direction away from the first overlapping sub-region. The n is equal to the number of columns of pixels included in the first overlapping sub-region. If the overlapping sub-region is divided according to a unit region in the real world, the computer device can obtain the first region in the target sub-region close to the first overlapping sub-region with reference to the implementation principles of the above-mentioned manner.

It should be noted that the computer device calculates a difference between a sum of a plurality of hotness values included in the first hot data in the first overlapping sub-region and a sum of a plurality of hotness values included in the hot data in the first region, and an absolute value of the calculated difference is taken as the first dispersion. And the computer device may calculate a difference between a sum of a plurality of hotness values included in the second hot data in the first overlapping sub-region and the sum of the plurality of hotness values included in the hot data in the first region, and an absolute value of the calculated difference is taken as the second dispersion.

The computer device calculates a difference between an average value of a plurality of hotness values included in the first hot data in the first overlapping sub-region and an average value of a plurality of hotness values included in the hot data in the first region, and an absolute value of the calculated difference is taken as the first dispersion. And the computer device calculates a difference between an average value of a plurality of hotness values included in the second hot data in the first overlapping sub-region and the average value of the plurality of hotness values included in the hot data in the first region, and an absolute value of the calculated difference is taken as the second dispersion.

After determining the first dispersion and the second dispersion, if the first dispersion is greater than the second dispersion, it illustrates that the difference between the first hot data and the hot data in the first region is relatively large, i.e., the first hot data and the hot data in the first region are not close. In this case, the second hot data can be taken as the hot data in the first overlapping sub-region. On the contrary, if the first dispersion is less than the second dispersion, it illustrates that the difference between the second hot data and the hot data in the first region is relatively large. In this case, the first hot data can be taken as the hot data in the first overlapping sub-region. Of course, if the first dispersion is equal to the second dispersion, it illustrates that both the first hot data and the second hot data are close to the hot data in the first region. In this case, the computer device can randomly select one of the first hot data or the second hot data as the hot data in the first overlapping sub-region.

For example, see Tables 1 and 2 below. As shown in Table 1, the three hotness values included the first hot data in the first overlapping sub-region between image acquisition device C1 and image acquisition device C2 are 2, 1, and 3, and the three hotness values included in the second hot data are 2, 3, and 4. Assuming that a first region close to the first overlapping sub-region is a region in the monitoring sub-region of C1, and that hot data of the first region are 3, 5, and 2, an absolute value of the difference between the sum of the multiple hotness values included in the first hot data and the sum of the multiple hotness values included in the hot data in the first region is 4, i.e., the first dispersion is 4, and an absolute value of the difference between the sum of the multiple hotness values included in the second hot data and the sum of the multiple hotness values included in the hot data in the first region is 1, i.e., the second dispersion is 1. Since the first dispersion is greater than the second dispersion, the second hot data can be taken as the hot data in the first overlapping sub-region, and the thus obtained hot data is shown in Table 2.

**Table 1**

| Image acquisition device C1 | | Image acquisition device C2 | |
|---|---|---|---|
| Hot data in the first region | First hot data in the first overlapping sub-region | Second hot data in the first overlapping sub-region | Hot data in the region adjacent to the overlapping monitoring region |
| 3 | 2 | 2 | ...... |
| 5 | 1 | 3 | ...... |
| 2 | 3 | 4 | ...... |

**Table 2**

| Image acquisition device C1 | Image acquisition device C2 | |
|---|---|---|
| Hot data in the first region | Second hot data in the first overlapping sub-region | Hot data in the region adjacent to the overlapping monitoring region |
| 3 | 2 | ...... |
| 5 | 3 | ...... |
| 2 | 4 | ...... |

It can be seen that the embodiment of the present application selects one piece of hot data from the two pieces of hot data respectively corresponding to the two image acquisition devices as the hot data in the first overlapping sub-region by comparing the dispersions. Since a smaller dispersion indicates that the corresponding hot data is more close to the hot data in the target sub-region close to the overlapping sub-region, selecting the hot data with a smaller dispersion as the hot data in the overlapping sub-region can ensure the continuity of the hot data in the overlapping sub-region and the target sub-region. The hot data in the global region thus obtained has more continuous hotness values in the target and overlapping sub-regions, and the hot color values in the target and overlapping sub-regions will be more continuous when the hot data in the global region is subsequently displayed.

For each overlapping sub-region in the overlapping monitoring region of two adjacent image acquisition devices, the computer device can select one of the two pieces of hot data of the two adjacent image acquisition devices as the hot data in the corresponding pixel region through the above-mentioned implementation, so as to finally obtain the hot data in the overlapping monitoring region.

The above is an implementation of determining hot data in an overlapping monitoring region provided by the embodiment of this application. In some other possible implementations, the computer device may also randomly select one of the two pieces of hot data in the overlapping monitoring region respectively acquired by the two image acquisition devices as the hot data in the overlapping monitoring region.

At step 304, based on the hot data in each overlapping monitoring region and hot data in a remaining monitoring region other than the corresponding overlapping monitoring region of each image acquisition device, hot data in the global region is determined.

The computer device can determine, based on the hot data in the overlapping monitoring region and the hot data in the remaining monitoring region other than the overlapping monitoring region of each image acquisition device, hot data in the global region.

In some embodiments, after determining the hot data in the overlapping monitoring region between each adjacent image acquisition device, for a non-overlapping monitoring region, the computer device can fill this region in the global region map with, according to the hot data in this region of the corresponding image acquisition device, hot color values corresponding to the hot data in this region. And for an overlapping monitoring region, the computer device can fill this overlapping monitoring region in the global region map with, according to the determined hot data in the overlapping monitoring region, hot color values corresponding to the hot data in the overlapping monitoring region. In this way, the heat map in the global region can be obtained, and thus the hot data in the global region can be displayed. Different hotness values correspond to different hot color values.

In an example, in some possible cases, a form other than a heat map may also be used to store or display the hot data in the global region, for example, by saving the coordinate ranges of each region associated with hot data in the corresponding region to obtain the hot data in the global region. In another example, hot data in each region can be saved as a matrix according to the coordinate ranges of each region, and use this matrix as the hot data in this global region, which is not limited in the embodiments of the present application.

In the embodiment of the present application, the global region can be monitored by a plurality of image acquisition devices, and according to the hot data in the monitoring sub-region of each image acquisition device, the hot data in the global region can be determined. This solves the problem that the hot data in the global region cannot be obtained due to the limited monitoring range of one single image acquisition device. In addition, in the present application, an overlapping monitoring region of adjacent image acquisition devices can be determined according to the monitoring sub-region of each image acquisition device in the global region. And then one of the hot data in the overlapping monitoring region of the adjacent image acquisition devices can be selected as the hot data in the overlapping monitoring region. On this basis, when the hot data in the global region is displayed based on the hot data in the overlapping coverage region (i.e., the overlapping monitoring region), the problem of poor display caused by superimposing two pieces of data from two image acquisition devices can be avoided, improving the image effect of the heat map in the global region, which is conducive to the user's intuitive identification of hot regions based on the hot data in the global region.

In addition, in the embodiment of this application, from two pieces of hot data in the overlapping sub-region, the one with less dispersion to hot data in a region close to the overlapping sub-region is remained. In this way, it can be ensured that the hot data in the overlapping sub-region is more close to the surrounding hot data, thus making the hot data finally displayed more realistic and continuous.

In addition, applying the method provided by this application to determine hot data in a global region does not require strict manual calibration of the image acquisition device, which can effectively reduce the installation and calibration cost of the image acquisition device, enable rapid installation and deployment, and have a high accuracy rate.

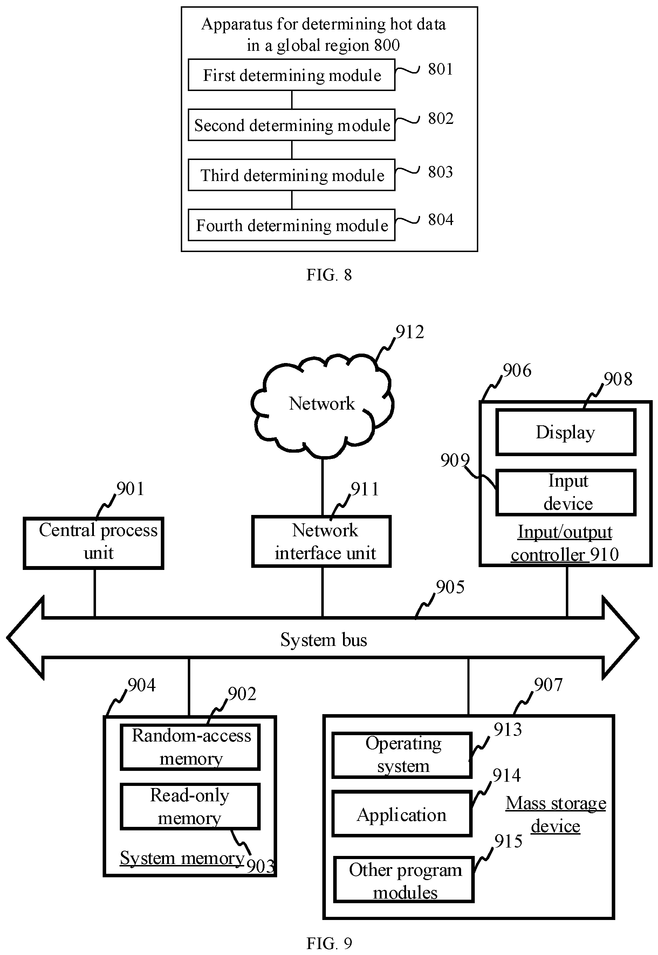

Fig. 8 is a structure schematic diagram illustrating an apparatus 800 for determining hot data in a global region according to an embodiment of the present application. The apparatus can include a software, a hardware, or a combination of both. Referring to Fig. 8, the apparatus 800 includes the following:
a first determining module 801, for determining, for each of a plurality of image acquisition devices deployed in the global region, a monitoring sub-region of the image acquisition device in the global region;
a second determining module 802, for determining, based on the monitoring sub-region of each image acquisition device, an overlapping monitoring region of the monitoring sub-regions of the image acquisition devices which are adjacent;
a third determining module 803, for selecting, from hot data in the monitoring sub-regions of the adjacent image acquisition devices, hot data in the overlapping monitoring region; and
a fourth determining module 804, for determining hot data in the global region, based on the hot data in each overlapping monitoring region and hot data in a remaining region other than the corresponding overlapping monitoring region of each image acquisition device.

In an example, the first determining module 801 is specifically for:
determining an actual monitoring range of the first image acquisition device, the first image acquisition device being any one of the plurality of image acquisition devices; and
determining, based on the actual monitoring range and an actual mounting position of the first image acquisition device, the monitoring sub-region of the first image acquisition device in the global region; or, determining, based on the actual monitoring range of the first image acquisition device and a mounting position in a global region map, the monitoring sub-region of the first image acquisition device in the global region map, where the global region map is an image corresponding to the global region.

In an example, the first determining module 801 is specifically for:
obtaining a first field of view and a first distance corresponding to the first image acquisition device, the first distance being a height of the first image acquisition device from ground, or the first distance being a distance between a boundary point photographed by the first image acquisition device at the first field of view and the first image acquisition device; and
determining, based on the first field of view and the first distance, the actual monitoring range of the first image acquisition device.

In an example, the second determining module 802 is specifically for:
obtaining coordinates of each position point in a first monitoring sub-region of the first image acquisition device and obtaining coordinates of each position point in a second monitoring sub-region of a second image acquisition device, the first image acquisition device and the second image acquisition device being any pair of adjacent image acquisition devices; and
determining a region formed by position points with same coordinates in the first monitoring sub-region and the second monitoring sub-region as the overlapping monitoring region of the first image acquisition device and the second image acquisition device.

In an example, the third determining module 803 includes:
a dividing sub-module, for dividing the overlapping monitoring region of the first image acquisition device and the second image acquisition device into a plurality of overlapping sub-regions, the first image acquisition device and the second image acquisition device being any pair of adjacent image acquisition devices;
a determining sub-module, for determining, according to a position of each overlapping sub-region, from the hot data in the first monitoring sub-region of the first image acquisition device and the hot data in the second monitoring sub-region of the second image acquisition device, the hot data in the corresponding overlapping sub-region.

In an example, the determining sub-module is specifically for:
obtaining first hot data in a first overlapping sub-region from hot data in the first monitoring sub-region, and obtaining second hot data in the first overlapping sub-region from hot data in the second monitoring sub-region, the first overlapping sub-region being any one of the plurality of overlapping sub-regions;
determining a target sub-region close to a position of the first overlapping sub-region from the first monitoring sub-region and the second monitoring sub-region;
determining a first dispersion between the first hot data and the hot data in the target sub-region, and determining a second dispersion between the second hot data and the hot data in the target sub-region;
determining, according to the first dispersion and the second dispersion, hot data in the first overlapping sub-region.

In an example, the determining sub-module is specifically for:
determining one of a first remaining region or a second remaining region that is closer to the position of the first overlapping sub-region as the target sub-region, where the first remaining region is a remaining region in the first monitoring sub-region other than the overlapping monitoring region and the second remaining region is a remaining region in the second monitoring sub-region other than the overlapping monitoring region.

In an example, the determining sub-module is specifically for:
if the first dispersion is greater than the second dispersion, determining the second hot data as the hot data in the first overlapping sub-region; or
if the first dispersion is less than the second dispersion, determining the first hot data as the hot data in the first overlapping sub-region.

In the embodiment of the present application, the global region can be monitored by a plurality of image acquisition devices, and according to the hot data in the monitoring sub-region of each image acquisition device, the hot data in the global region can be determined. This solves the problem that the hot data in the global region cannot be obtained due to the limited monitoring range of one single image acquisition device. In addition, in the present application, an overlapping monitoring region of adjacent image acquisition devices can be determined according to the monitoring sub-region of each image acquisition device in the global region. And then hot data in the overlapping monitoring region is determined according to hot data of the adjacent image acquisition devices. On this basis, when the hot data in the global region is displayed based on the hot data in the overlapping coverage region (i.e., the overlapping monitoring region), the problem of poor display caused by superimpose two pieces of data from two image acquisition devices can be avoided, improving the image effect of the heat map in the global region, which is conducive to the user's intuitive identification of hot regions based on the hot data in the global region.

The method for determining hot data in a global region described above can be performed by a computer device. Based on this, the embodiment of the application further provides a computer device for determining hot data in a global region. The computer device may include a processor and a memory, where the memory is used to store a computer program and the processor is used to execute the program stored in the memory to implement the steps of the method for determining hot data in a global region described above.

In one possible implementation, as shown in Fig. 9, the above-described computer device may specifically include a central process unit (CPU) 901, a system memory 904 including a random-access memory (RAM) 902 and a read-only memory (ROM) 903, and a system bus 905 for connecting the system memory 904 with the central process Unit 901. The device further includes a basic input/output system (I/O system) 906 that helps transfer information between various devices in the computer, and a mass storage device 907 for storing an operating system 913, applications 914, and other program modules 915.

The basic input/output system 906 includes a display 908 for display information and an input device 909 such as a mouse, a keyboard or the like for a user to input information. The display 908 and the input device 909 are both connected to the central process unit 901 through an input-output controller 910 connected to a system bus 905. The basic input/output system 906 further includes input-output controller 910 for receiving and processing input from a plurality of other devices such as a keyboard, mouse, or electronic stylus. Similarly, the input-output controller 910 further provides output to a display, a printer or other types of output device.

The mass storage device 907 is connected to the central processing unit 901 via a mass storage controller (not shown) connected to the system bus 905. The mass storage device 907 and its associated computer-readable medium provide the device with nonvolatile storage. That is, the mass storage device 907 may include computer-readable media (not shown) such as a hard disk or CD-ROM drive.

Without loss of generality, the computer-readable media may include a computer storage medium and a communication medium. The computer-storage media may include a volatile and non-volatile, removable and non-removable medium implemented in any method or technique for storing information such as computer-readable instructions, data structures, program modules, or other data. The computer storage media may include: RAM, ROM, EPROM, EEPROM, flash memory or other solid storage technologies; CD-ROM, DVD or other optical storage; magnetic tape cassette, magnetic tape, disk storage or other magnetic storage devices. Of course, those in the art may understand that computer storage media are not limited to the above several types. The system memory 904 and the mass storage device 907 described above may together be referred to as a memory.

According to various embodiments of the present application, the device may also operate through a remote computer in a connected network such as the Internet. That is, the device may be connected to a network 912 through a network interface unit 911 connected to the system bus 905. In another words, the device may be connected to other types of networks or remote computer systems (not shown) using the network interface unit 911.

The memory further includes one or more programs, where the one or more programs are stored in the memory, and are configured to be executed by the CPU.

In some embodiments, there is also provided a computer-readable storage medium having a computer program stored in the storage medium, where the computer program when executed by a processor implementing the steps of the method for determining hot data for a global region in the above embodiments. For example, the computer-readable storage medium may be a ROM, RAM, CD-ROM, magnetic tape, floppy disk and an optical data storage device or the like.

Notably, the computer-readable storage medium mentioned in the embodiment of this application may be a non-volatile storage medium, in other words, it may be a non-instantaneous storage medium.

It should be understood that all or some of the steps of the above embodiments may be implemented by software, hardware, firmware, or any combinations thereof. When implemented using software, it can be implemented in whole or in part in the form in a computer program product. The computer program product includes one or more computer instructions. The computer instructions may be stored in the computer-readable storage medium.

That is, in some embodiments, a computer program product containing instructions is also provided which, when run on a computer device, causes the computer device to perform the steps of the method for determining hot data in a global region described above.

In some other embodiments, a computer program product which, when run on a computer device, causes the computer device to perform the steps of the method for determining hot data in a global region described above.

The above are not intended to limit the embodiment of this application. Any modification, equivalent replacement, or improvement is included in the scope of the invention provided that this falls within the scope of the appended set of claims.

## Claims

1. A method for determining hot data in a global region, performed by a computer device (102), the method comprising:
determining (301), for each of a plurality of image acquisition devices (101) deployed in the global region, a monitoring sub-region of the image acquisition device in the global region;
determining (302), based on the monitoring sub-region of each image acquisition device (101), an overlapping monitoring region of the monitoring sub-regions of the image acquisition devices (101) which are adjacent;
determining (303), from hot data in the monitoring sub-regions of the adjacent image acquisition devices (101), hot data in the overlapping monitoring region, wherein the hot data in a monitoring sub-region corresponding to each image acquisition device indicates data that reflects a number of persons appearing in the monitoring sub-region and/or durations of the persons staying in the monitoring sub-region;
wherein determining, from the hot data in the monitoring sub-regions of the adjacent image acquisition devices (101), the hot data in the overlapping monitoring region comprises:
dividing the overlapping monitoring region of a first image acquisition device (101) and a second image acquisition device (101) into a plurality of overlapping sub-regions, the first image acquisition device (101) and the second image acquisition device (101) being any pair of the adjacent image acquisition devices (101);
obtaining first hot data in a first overlapping sub-region from the hot data in the first monitoring sub-region, and obtaining second hot data in the first overlapping sub-region from the hot data in the second monitoring sub-region, the first overlapping sub-region being any one of the plurality of overlapping sub-regions;
determining a target sub-region close to a position of the first overlapping sub-region from the first monitoring sub-region and the second monitoring sub-region;
determining a first dispersion between the first hot data and hot data in the target sub-region, and determining a second dispersion between the second hot data and the hot data in the target sub-region, wherein the first dispersion is an absolute value of a difference between a sum of a plurality of hotness values included in the first hot data in the first overlapping sub-region and a sum of a plurality of hotness values included in the hot data in a first region, and the second dispersion is an absolute value of a difference between a sum of a plurality of hotness values included in the second hot data in the first overlapping sub-region and the sum of the plurality of hotness values included in the hot data in the first region, or, the first dispersion is an absolute value of a difference between an average value of a plurality of hotness values included in the first hot data in the first overlapping sub-region and an average value of a plurality of hotness values included in the hot data in the first region, and the second dispersion is an absolute value of a difference between an average value of a plurality of hotness values included in the second hot data in the first overlapping sub-region and an average value of the plurality of hotness values included in the hot data in the first region, wherein the first region indicates a region formed by n rows or n columns of pixels in the target sub-region, the n rows or n columns starting from a row or a column of pixels closest to the first overlapping sub-region and towards a direction away from the first overlapping sub-region; and
determining, according to the first dispersion and the second dispersion, hot data in the first overlapping sub-region; and
determining (304) hot data in the global region based on the hot data in each overlapping monitoring region and hot data in a remaining region other than the corresponding overlapping monitoring region of each image acquisition device (101).

2. The method according to claim 1, wherein determining, for each of the plurality of image acquisition devices (101) deployed in the global region, the monitoring sub-region of the image acquisition device (101) in the global region, comprises:
determining an actual monitoring range of a first image acquisition device (101), the first image acquisition device (101) being any one of the plurality of image acquisition devices (101); and
determining, based on the actual monitoring range and an actual mounting position of the first image acquisition device (101), the monitoring sub-region of the first image acquisition device (101) in the global region; or, determining, based on the actual monitoring range of the first image acquisition device (101) and a mounting position of the first image acquisition device (101) in a global region map, the monitoring sub-region of the first image acquisition device (101) in the global region map, wherein the global region map is an image corresponding to the global region.

3. The method according to claim 2, wherein determining the actual monitoring range of the first image acquisition device (101) comprises:
obtaining a first field of view and a first distance corresponding to the first image acquisition device (101), the first distance being a height of the first image acquisition device (101) from ground, or the first distance being a distance between a boundary point photographed by the first image acquisition device (101) at the first field of view and the first image acquisition device (101); and
determining, based on the first field of view and the first distance, the actual monitoring range of the first image acquisition device (101).

4. The method according to claim 1, wherein determining, based on the monitoring sub-region of each image acquisition device (101), the overlapping monitoring region of the monitoring sub-regions of the image acquisition devices (101) which are adjacent, comprises:
obtaining coordinates of each position point in a first monitoring sub-region of a first image acquisition device (101) and obtaining coordinates of each position point in a second monitoring sub-region of a second image acquisition device (101), the first image acquisition device (101) and the second image acquisition device (101) being any pair of the adjacent image acquisition devices (101); and
determining a region formed by position points with same coordinates in the first monitoring sub-region and the second monitoring sub-region as the overlapping monitoring region of the first image acquisition device (101) and the second image acquisition device (101).

5. The method according to any one of claims 1-4, wherein determining the target sub-region close to the position of the first overlapping sub-region from the first monitoring sub-region and the second monitoring sub-region comprises:
determining one of a first remaining region or a second remaining region that is closer to the position of the first overlapping sub-region as the target sub-region, wherein the first remaining region is a remaining region in the first monitoring sub-region other than the overlapping monitoring region and the second remaining region is a remaining region in the second monitoring sub-region other than the overlapping monitoring region; and
determining, according to the first dispersion and the second dispersion, the hot data in the first overlapping sub-region, comprising:
if the first dispersion is greater than the second dispersion, determining the second hot data as the hot data in the first overlapping sub-region; or
if the first dispersion is less than the second dispersion, determining the first hot data as the hot data in the first overlapping sub-region.

6. An apparatus for determining hot data in a global region (800), comprising:
a first determining module (801), for determining, for each of a plurality of image acquisition devices (101) deployed in the global region, a monitoring sub-region of the image acquisition device (101) in the global region;
a second determining module (802), for determining, based on the monitoring sub-region of each image acquisition device (101), an overlapping monitoring region of the monitoring sub-regions of the image acquisition devices (101) which are adjacent;
a third determining module (803), for determining, from hot data in the monitoring sub-regions of the adjacent image acquisition devices (101), hot data in the overlapping monitoring region, wherein the hot data in a monitoring sub-region corresponding to each image acquisition device indicates data that reflects a number of persons appearing in the monitoring sub-region and/or durations of the persons staying in the monitoring sub-region;
wherein, the third determining module (803) comprises:
a dividing sub-module, for dividing the overlapping monitoring region of the first image acquisition device (101) and the second image acquisition device (101) into a plurality of overlapping sub-regions; and
a determining sub-module, for determining, according to a position of each overlapping sub-region, from the hot data in the first monitoring sub-region of the first image acquisition device (101) and the hot data in the second monitoring sub-region of the second image acquisition device (101), the hot data in the corresponding overlapping sub-region;
wherein, the determining sub-module is specifically for:
obtaining first hot data in a first overlapping sub-region from hot data in the first monitoring sub-region, and obtaining second hot data in the first overlapping sub-region from hot data in the second monitoring sub-region, the first overlapping sub-region being any one of the plurality of overlapping sub-regions;
determining a target sub-region close to a position of the first overlapping sub-region from the first monitoring sub-region and the second monitoring sub-region;
determining a first dispersion between the first hot data and hot data in the target sub-region, and determining a second dispersion between the second hot data and the hot data in the target sub-region; and
determining, according to the first dispersion and the second dispersion, hot data in the first overlapping sub-region; wherein the first dispersion is an absolute value of a difference between a sum of a plurality of hotness values included in the first hot data in the first overlapping sub-region and a sum of a plurality of hotness values included in the hot data in a first region, and the second dispersion is an absolute value of a difference between a sum of a plurality of hotness values included in the second hot data in the first overlapping sub-region and the sum of the plurality of hotness values included in the hot data in the first region, or, the first dispersion is an absolute value of a difference between an average value of a plurality of hotness values included in the first hot data in the first overlapping sub-region and an average value of a plurality of hotness values included in the hot data in the first region, and the second dispersion is an absolute value of a difference between an average value of a plurality of hotness values included in the second hot data in the first overlapping sub-region and an average value of the plurality of hotness values included in the hot data in the first region, wherein the first region indicates a region formed by n rows or n columns of pixels in the target sub-region, the n rows or n columns starting from a row or a column of pixels closest to the first overlapping sub-region and towards a direction away from the first overlapping sub-region;
a fourth determining module (804), for determining hot data in the global region, based on the hot data in each overlapping monitoring region and hot data in a remaining region other than the corresponding overlapping monitoring region of each image acquisition device (101).

7. The apparatus (800) according to claim 6, wherein the first determining module (801) is specifically for:
determining an actual monitoring range of a first image acquisition device (101), the first image acquisition device (101) being any one of the plurality of image acquisition devices (101); and
determining, based on the actual monitoring range and an actual mounting position of the first image acquisition device (101), the monitoring sub-region of the first image acquisition device (101) in the global region; or, determining, based on the actual monitoring range of the first image acquisition device (101) and a mounting position of the first image acquisition device (101) in a global region map, the monitoring sub-region of the first image acquisition device (101) in the global region map, wherein the global region map is an image corresponding to the global region;
wherein, the first determining module (801) is specifically for:
obtaining a first field of view and a first distance corresponding to the first image acquisition device (101), the first distance being a height of the first image acquisition device (101) from ground, or the first distance being a distance between a boundary point photographed by the first image acquisition device (101) at the first field of view and the first image acquisition device (101); determining, based on the first field of view and the first distance, the actual monitoring range of the first image acquisition device (101);
wherein, the second determining module (802) is specifically for:
obtaining coordinates of each position point in a first monitoring sub-region of the first image acquisition device (101) and obtaining coordinates of each position point in a second monitoring sub-region of a second image acquisition device (101), the first image acquisition device (101) and the second image acquisition device (101) being any pair of the adjacent image acquisition devices (101); and
determining a region formed by position points with same coordinates in the first monitoring sub-region and the second monitoring sub-region as the overlapping monitoring region of the first image acquisition device (101) and the second image acquisition device (101);
wherein, the determining sub-module is specifically for:
determining one of a first remaining region or a second remaining region that is closer to the position of the first overlapping sub-region as the target sub-region, wherein the first remaining region is a remaining region in the first monitoring sub-region other than the overlapping monitoring region and the second remaining region is a remaining region in the second monitoring sub-region other than the overlapping monitoring region;
wherein, the determining sub-module is further specifically for:
if the first dispersion is greater than the second dispersion, determining the second hot data as the hot data in the first overlapping sub-region; or
if the first dispersion is less than the second dispersion, determining the first hot data as the hot data in the first overlapping sub-region.

8. A computer device (102), **characterized in that** the computer device (102) comprises a processor and a memory, wherein the memory is for storing a computer program and the processor is for executing the program stored in the memory to implement the steps of the method for determining hot data in a global region according to any one of claims 1 to 5.

9. A computer-readable storage medium, **characterized by** a computer program being stored within the computer-readable storage medium, wherein the computer program, when executed by a processor, implements the steps of the method according to any one of claims 1 to 5.

10. A computer program, when running on a computer device (102), causes the computer device (102) to perform the steps of the method according to any one of claims 1 to 5.

11. A computer program product, comprising instructions that, when running on a computer device (102), cause the computer device (102) to perform the steps of the method according to any one of claims 1 to 5.

## Patentansprüche

1. Verfahren zum Bestimmen von Frequentierungsdaten (hot data) in einer globalen Region, das von einer Computervorrichtung (102) durchgeführt wird, wobei das Verfahren folgende Schritte umfasst:
Bestimmen (301), für jede aus einer Mehrzahl von Bilderfassungsvorrichtungen (101), die in der globalen Region eingesetzt werden, einer Überwachungsunterregion der Bilderfassungsvorrichtung in der globalen Region;
Bestimmen (302), basierend auf der Überwachungsunterregion jeder Bilderfassungsvorrichtung (101), einer überlappenden Überwachungsregion der Überwachungsunterregionen der Bilderfassungsvorrichtungen (101), die benachbart sind;
Bestimmen (303), aus Frequentierungsdaten in den Überwachungsunterregionen der benachbarten Bilderfassungsvorrichtungen (101), von Frequentierungsdaten in der überlappenden Überwachungsregion, wobei die Frequentierungsdaten in einer Überwachungsunterregion, die jeder Bilderfassungsvorrichtung entspricht, Daten angeben, die eine Anzahl von Personen, die in der Überwachungsunterregion erscheinen, und/oder Aufenthaltsdauern der Personen, die in der Überwachungsunterregion bleiben, widerspiegeln;
wobei das Bestimmen, aus den Frequentierungsdaten in den Überwachungsunterregionen der benachbarten Bilderfassungsvorrichtungen (101), der Frequentierungsdaten in der überlappenden Überwachungsregion folgende Schritte umfasst:
Unterteilen der überlappenden Überwachungsregion einer ersten Bilderfassungsvorrichtung (101) und einer zweiten Bilderfassungsvorrichtung (101) in eine Mehrzahl von überlappenden Unterregionen, wobei die erste Bilderfassungsvorrichtung (101) und die zweite Bilderfassungsvorrichtung (101) ein beliebiges Paar der benachbarten Bilderfassungsvorrichtungen (101) sind;
Erhalten erster Frequentierungsdaten in einer ersten überlappenden Unterregion aus den Frequentierungsdaten in der ersten Überwachungsunterregion und Erhalten zweiter Frequentierungsdaten in der ersten überlappenden Unterregion aus den Frequentierungsdaten in der zweiten Überwachungsunterregion, wobei die erste überlappende Unterregion eine beliebige der Mehrzahl von überlappenden Unterregionen ist;
Bestimmen einer Zielunterregion nahe einer Position der ersten überlappenden Unterregion aus der ersten Überwachungsunterregion und der zweiten Überwachungsunterregion;
Bestimmen einer ersten Dispersion zwischen den ersten Frequentierungsdaten und Frequentierungsdaten in der Zielunterregion und Bestimmen einer zweiten Dispersion zwischen den zweiten Frequentierungsdaten und den Frequentierungsdaten in der Zielunterregion, wobei die erste Dispersion ein Absolutwert einer Differenz zwischen einer Summe einer Mehrzahl von Frequentierungswerten (hotness values), die in den ersten Frequentierungsdaten in der ersten überlappenden Unterregion enthalten sind, und einer Summe einer Mehrzahl von Frequentierungswerten, die in den Frequentierungsdaten in einer ersten Region enthalten sind, ist und die zweite Dispersion ein Absolutwert einer Differenz zwischen einer Summe einer Mehrzahl von Frequentierungswerten, die in den zweiten Frequentierungsdaten in der ersten überlappenden Unterregion enthalten sind, und der Summe der Mehrzahl von Frequentierungswerten, die in den Frequentierungsdaten in der ersten Region enthalten sind, ist oder die erste Dispersion ein Absolutwert einer Differenz zwischen einem Durchschnittswert einer Mehrzahl von Frequentierungswerten, die in den ersten Frequentierungsdaten in der ersten überlappenden Unterregion enthalten sind, und einem Durchschnittswert einer Mehrzahl von Frequentierungswerten, die in den Frequentierungsdaten in der ersten Region enthalten sind, ist und die zweite Dispersion ein Absolutwert einer Differenz zwischen einem Durchschnittswert einer Mehrzahl von Frequentierungswerten, die in den zweiten Frequentierungsdaten in der ersten überlappenden Unterregion enthalten sind, und einem Durchschnittswert der Mehrzahl von Frequentierungswerten, die in den Frequentierungsdaten in der ersten Region enthalten sind, ist, wobei die erste Region eine Region angibt, die durch n Zeilen oder n Spalten von Pixeln in der Zielunterregion gebildet wird, wobei die n Zeilen oder n Spalten von einer Zeile oder einer Spalte von Pixeln beginnen, die der ersten überlappenden Unterregion am nächsten ist, und in eine Richtung weg von der ersten überlappenden Unterregion verlaufen; und
Bestimmen, gemäß der ersten Dispersion und der zweiten Dispersion, von Frequentierungsdaten in der ersten überlappenden Unterregion; und
Bestimmen (304) von Frequentierungsdaten in der globalen Region basierend auf den Frequentierungsdaten in jeder überlappenden Überwachungsregion und Frequentierungsdaten in einer verbleibenden Region, die sich von der entsprechenden überlappenden Überwachungsregion jeder Bilderfassungsvorrichtung (101) unterscheidet.

2. Verfahren nach Anspruch 1, wobei das Bestimmen, für jede aus der Mehrzahl von Bilderfassungsvorrichtungen (101), die in der globalen Region eingesetzt werden, der Überwachungsunterregion der Bilderfassungsvorrichtung (101) in der globalen Region folgende Schritte umfasst:
Bestimmen eines tatsächlichen Überwachungsbereichs einer ersten Bilderfassungsvorrichtung (101), wobei die erste Bilderfassungsvorrichtung (101) eine beliebige aus der Mehrzahl von Bilderfassungsvorrichtungen (101) ist; und
Bestimmen, basierend auf dem tatsächlichen Überwachungsbereich und einer tatsächlichen Montageposition der ersten Bilderfassungsvorrichtung (101), der Überwachungsunterregion der ersten Bilderfassungsvorrichtung (101) in der globalen Region; oder Bestimmen, basierend auf dem tatsächlichen Überwachungsbereich der ersten Bilderfassungsvorrichtung (101) und einer Montageposition der ersten Bilderfassungsvorrichtung (101) in einer globalen Regionskarte, der Überwachungsunterregion der ersten Bilderfassungsvorrichtung (101) in der globalen Regionskarte, wobei die globale Regionskarte ein Bild ist, das der globalen Region entspricht.

3. Verfahren nach Anspruch 2, wobei das Bestimmen des tatsächlichen Überwachungsbereichs der ersten Bilderfassungsvorrichtung (101) folgende Schritte umfasst:
Erhalten eines ersten Sichtfelds und eines ersten Abstands, die der ersten Bilderfassungsvorrichtung (101) entsprechen, wobei der erste Abstand eine Höhe der ersten Bilderfassungsvorrichtung (101) vom Boden ist oder der erste Abstand ein Abstand zwischen einem Grenzpunkt, der von der ersten Bilderfassungsvorrichtung (101) am ersten Sichtfeld fotografiert wird, und der ersten Bilderfassungsvorrichtung (101) ist; und
Bestimmen, basierend auf dem ersten Sichtfeld und dem ersten Abstand, des tatsächlichen Überwachungsbereichs der ersten Bilderfassungsvorrichtung (101).

4. Verfahren nach Anspruch 1, wobei das Bestimmen, basierend auf der Überwachungsunterregion jeder Bilderfassungsvorrichtung (101), der überlappenden Überwachungsregion der Überwachungsunterregionen der Bilderfassungsvorrichtungen (101), die benachbart sind, folgende Schritte umfasst:
Erhalten von Koordinaten jedes Positionspunkts in einer ersten Überwachungsunterregion einer ersten Bilderfassungsvorrichtung (101) und Erhalten von Koordinaten jedes Positionspunkts in einer zweiten Überwachungsunterregion einer zweiten Bilderfassungsvorrichtung (101), wobei die erste Bilderfassungsvorrichtung (101) und die zweite Bilderfassungsvorrichtung (101) ein beliebiges Paar der benachbarten Bilderfassungsvorrichtungen (101) sind; und
Bestimmen einer Region, die durch Positionspunkte mit denselben Koordinaten in der ersten Überwachungsunterregion und der zweiten Überwachungsunterregion gebildet wird, als die überlappende Überwachungsregion der ersten Bilderfassungsvorrichtung (101) und der zweiten Bilderfassungsvorrichtung (101).

5. Verfahren nach einem der Ansprüche 1-4, wobei das Bestimmen der Zielunterregion nahe der Position der ersten überlappenden Unterregion aus der ersten Überwachungsunterregion und der zweiten Überwachungsunterregion folgende Schritte umfasst:
Bestimmen einer ersten verbleibenden Region oder einer zweiten verbleibenden Region, die sich näher an der Position der ersten überlappenden Unterregion befindet, als die Zielunterregion, wobei die erste verbleibende Region eine verbleibende Region in der ersten Überwachungsunterregion ist, die sich von der überlappenden Überwachungsregion unterscheidet, und die zweite verbleibende Region eine verbleibende Region in der zweiten Überwachungsunterregion ist, die sich von der überlappenden Überwachungsregion unterscheidet; und
Bestimmen, gemäß der ersten Dispersion und der zweiten Dispersion, der Frequentierungsdaten in der ersten überlappenden Unterregion, umfassend:
wenn die erste Dispersion größer als die zweite Dispersion ist, Bestimmen der zweiten Frequentierungsdaten als die Frequentierungsdaten in der ersten überlappenden Unterregion; oder
wenn die erste Dispersion kleiner als die zweite Dispersion ist, Bestimmen der ersten Frequentierungsdaten als die Frequentierungsdaten in der ersten überlappenden Unterregion.

6. Vorrichtung zum Bestimmen von Frequentierungsdaten in einer globalen Region (800), umfassend:
ein erstes Bestimmungsmodul (801) zum Bestimmen, für jede aus einer Mehrzahl von Bilderfassungsvorrichtungen (101), die in der globalen Region eingesetzt werden, einer Überwachungsunterregion der Bilderfassungsvorrichtung (101) in der globalen Region;
ein zweites Bestimmungsmodul (802) zum Bestimmen, basierend auf der Überwachungsunterregion jeder Bilderfassungsvorrichtung (101), einer überlappenden Überwachungsregion der Überwachungsunterregionen der Bilderfassungsvorrichtungen (101), die benachbart sind;
ein drittes Bestimmungsmodul (803) zum Bestimmen, aus Frequentierungsdaten in den Überwachungsunterregionen der benachbarten Bilderfassungsvorrichtungen (101), von Frequentierungsdaten in der überlappenden Überwachungsregion, wobei die Frequentierungsdaten in einer Überwachungsunterregion, die jeder Bilderfassungsvorrichtung entspricht, Daten angeben, die eine Anzahl von Personen, die in der Überwachungsunterregion erscheinen, und/oder Aufenthaltsdauern der Personen, die in der Überwachungsunterregion bleiben, widerspiegeln;
wobei das dritte Bestimmungsmodul (803) Folgendes umfasst:
ein Unterteilungsuntermodul zum Unterteilen der überlappenden Überwachungsregion der ersten Bilderfassungsvorrichtung (101) und der zweiten Bilderfassungsvorrichtung (101) in eine Mehrzahl von überlappenden Unterregionen; und
ein Bestimmungsuntermodul zum Bestimmen, gemäß einer Position jeder überlappenden Unterregion, aus den Frequentierungsdaten in der ersten Überwachungsunterregion der ersten Bilderfassungsvorrichtung (101) und den Frequentierungsdaten in der zweiten Überwachungsunterregion der zweiten Bilderfassungsvorrichtung (101), der Frequentierungsdaten in der entsprechenden überlappenden Unterregion;
wobei das Bestimmungsuntermodul spezifisch für Folgendes eingerichtet ist:
Erhalten erster Frequentierungsdaten in einer ersten überlappenden Unterregion aus Frequentierungsdaten in der ersten Überwachungsunterregion und Erhalten zweiter Frequentierungsdaten in der ersten überlappenden Unterregion aus Frequentierungsdaten in der zweiten Überwachungsunterregion, wobei die erste überlappende Unterregion eine beliebige aus der Mehrzahl von überlappenden Unterregionen ist;
Bestimmen einer Zielunterregion nahe einer Position der ersten überlappenden Unterregion aus der ersten Überwachungsunterregion und der zweiten Überwachungsunterregion;
Bestimmen einer ersten Dispersion zwischen den ersten Frequentierungsdaten und Frequentierungsdaten in der Zielunterregion und Bestimmen einer zweiten Dispersion zwischen den zweiten Frequentierungsdaten und den Frequentierungsdaten in der Zielunterregion; und
Bestimmen, gemäß der ersten Dispersion und der zweiten Dispersion, von Frequentierungsdaten in der ersten überlappenden Unterregion; wobei die erste Dispersion ein Absolutwert einer Differenz zwischen einer Summe einer Mehrzahl von Frequentierungswerten, die in den ersten Frequentierungsdaten in der ersten überlappenden Unterregion enthalten sind, und einer Summe einer Mehrzahl von Frequentierungswerten ist, die in den Frequentierungsdaten in einer ersten Region enthalten sind, und die zweite Dispersion ein Absolutwert einer Differenz zwischen einer Summe einer Mehrzahl von Frequentierungswerten, die in den zweiten Frequentierungsdaten in der ersten überlappenden Unterregion enthalten sind, und der Summe der Mehrzahl von Frequentierungswerten ist, die in den Frequentierungsdaten in der ersten Region enthalten sind, oder die erste Dispersion ein Absolutwert einer Differenz zwischen einem Durchschnittswert einer Mehrzahl von Frequentierungswerten, die in den ersten Frequentierungsdaten in der ersten überlappenden Unterregion enthalten sind, und einem Durchschnittswert einer Mehrzahl von Frequentierungswerten ist, die in den Frequentierungsdaten in der ersten Region enthalten sind, und die zweite Dispersion ein Absolutwert einer Differenz zwischen einem Durchschnittswert einer Mehrzahl von Frequentierungswerten, die in den zweiten Frequentierungsdaten in der ersten überlappenden Unterregion enthalten sind, und einem Durchschnittswert der Mehrzahl von Frequentierungswerten ist, die in den Frequentierungsdaten in der ersten Region enthalten sind, wobei die erste Region eine Region angibt, die durch n Zeilen oder n Spalten von Pixeln in der Zielunterregion gebildet wird, wobei die n Zeilen oder n Spalten von einer Zeile oder einer Spalte von Pixeln beginnen, die der ersten überlappenden Unterregion am nächsten ist, und in eine Richtung weg von der ersten überlappenden Unterregion verlaufen;
ein viertes Bestimmungsmodul (804) zum Bestimmen von Frequentierungsdaten in der globalen Region basierend auf den Frequentierungsdaten in jeder überlappenden Überwachungsregion und Frequentierungsdaten in einer verbleibenden Region, die sich von der entsprechenden überlappenden Überwachungsregion jeder Bilderfassungsvorrichtung (101) unterscheidet.

7. Vorrichtung (800) nach Anspruch 6, wobei das erste Bestimmungsmodul (801) speziell für Folgendes eingerichtet ist:
Bestimmen eines tatsächlichen Überwachungsbereichs einer ersten Bilderfassungsvorrichtung (101), wobei die erste Bilderfassungsvorrichtung (101) eine beliebige aus der Mehrzahl von Bilderfassungsvorrichtungen (101) ist; und
Bestimmen, basierend auf dem tatsächlichen Überwachungsbereich und einer tatsächlichen Montageposition der ersten Bilderfassungsvorrichtung (101), der Überwachungsunterregion der ersten Bilderfassungsvorrichtung (101) in der globalen Region; oder Bestimmen, basierend auf dem tatsächlichen Überwachungsbereich der ersten Bilderfassungsvorrichtung (101) und einer Montageposition der ersten Bilderfassungsvorrichtung (101) in einer globalen Regionskarte, der Überwachungsunterregion der ersten Bilderfassungsvorrichtung (101) in der globalen Regionskarte, wobei die globale Regionskarte ein Bild ist, das der globalen Region entspricht;
wobei das erste Bestimmungsmodul (801) speziell für Folgendes eingerichtet ist:
Erhalten eines ersten Sichtfelds und eines ersten Abstands, die der ersten Bilderfassungsvorrichtung (101) entsprechen, wobei der erste Abstand eine Höhe der ersten Bilderfassungsvorrichtung (101) vom Boden ist oder der erste Abstand ein Abstand zwischen einem Grenzpunkt, der von der ersten Bilderfassungsvorrichtung (101) am ersten Sichtfeld fotografiert wird, und der ersten Bilderfassungsvorrichtung (101) ist; Bestimmen, basierend auf dem ersten Sichtfeld und dem ersten Abstand, des tatsächlichen Überwachungsbereichs der ersten Bilderfassungsvorrichtung (101);
wobei das zweite Bestimmungsmodul (802) speziell für Folgendes eingerichtet ist:
Erhalten von Koordinaten jedes Positionspunkts in einer ersten Überwachungsunterregion der ersten Bilderfassungsvorrichtung (101) und Erhalten von Koordinaten jedes Positionspunkts in einer zweiten Überwachungsunterregion einer zweiten Bilderfassungsvorrichtung (101), wobei die erste Bilderfassungsvorrichtung (101) und die zweite Bilderfassungsvorrichtung (101) ein beliebiges Paar der benachbarten Bilderfassungsvorrichtungen (101) sind; und
Bestimmen einer Region, die durch Positionspunkte mit denselben Koordinaten in der ersten Überwachungsunterregion und der zweiten Überwachungsunterregion gebildet wird, als die überlappende Überwachungsregion der ersten Bilderfassungsvorrichtung (101) und der zweiten Bilderfassungsvorrichtung (101);
wobei das Bestimmungsuntermodul speziell für Folgendes eingerichtet ist:
Bestimmen einer ersten verbleibenden Region oder einer zweiten verbleibenden Region, die sich näher an der Position der ersten überlappenden Unterregion befindet, als die Zielunterregion, wobei die erste verbleibende Region eine verbleibende Region in der ersten Überwachungsunterregion ist, die sich von der überlappenden Überwachungsregion unterscheidet, und die zweite verbleibende Region eine verbleibende Region in der zweiten Überwachungsunterregion ist, die sich von der überlappenden Überwachungsregion unterscheidet;
wobei das Bestimmungsuntermodul ferner speziell für Folgendes eingerichtet ist:
wenn die erste Dispersion größer als die zweite Dispersion ist, Bestimmen der zweiten Frequentierungsdaten als die Frequentierungsdaten in der ersten überlappenden Unterregion; oder
wenn die erste Dispersion kleiner als die zweite Dispersion ist, Bestimmen der ersten Frequentierungsdaten als die Frequentierungsdaten in der ersten überlappenden Unterregion.

8. Computervorrichtung (102), **dadurch gekennzeichnet, dass** die Computervorrichtung (102) einen Prozessor und einen Speicher umfasst, wobei der Speicher zum Speichern eines Computerprogramms dient und der Prozessor zum Ausführen des in dem Speicher gespeicherten Programms dient, um die Schritte des Verfahrens zum Bestimmen von Frequentierungsdaten in einer globalen Region nach einem der Ansprüche 1 bis 5 zu implementieren.

9. Computerlesbares Speichermedium, **dadurch gekennzeichnet, dass** ein Computerprogramm in dem computerlesbaren Speichermedium gespeichert ist, wobei das Computerprogramm, wenn es von einem Prozessor ausgeführt wird, die Schritte des Verfahrens nach einem der Ansprüche 1 bis 5 implementiert.

10. Computerprogramm, das, wenn es auf einer Computervorrichtung (102) ausgeführt wird, bewirkt, dass die Computervorrichtung (102) die Schritte des Verfahrens nach einem der Ansprüche 1 bis 5 durchführt.

11. Computerprogrammprodukt, das Befehle umfasst, die, wenn sie auf einer Computervorrichtung (102) ausgeführt werden, bewirken, dass die Computervorrichtung (102) die Schritte des Verfahrens nach einem der Ansprüche 1 bis 5 durchführt.

## Revendications

1. Procédé de détermination de données chaudes dans une région globale, réalisé par un dispositif informatique (102), le procédé comprenant :
la détermination (301), pour chacun d'une pluralité de dispositifs d'acquisition d'image (101) déployés dans la région globale, d'une sous-région de surveillance du dispositif d'acquisition d'image dans la région globale ;
la détermination (302), sur la base de la sous-région de surveillance de chaque dispositif d'acquisition d'image (101), d'une région de surveillance chevauchante des sous-régions de surveillance des dispositifs d'acquisition d'image (101) qui sont adjacents ;
la détermination (303), à partir de données chaudes dans les sous-régions de surveillance des dispositifs d'acquisition d'image (101) adjacents, de données chaudes dans la région de surveillance chevauchante, dans lequel les données chaudes dans une sous-région de surveillance correspondant à chaque dispositif d'acquisition d'image indiquent des données qui reflètent un nombre de personnes apparaissant dans la sous-région de surveillance et/ou des durées des personnes restant dans la sous-région de surveillance ;
dans lequel la détermination, à partir des données chaudes dans les sous-régions de surveillance des dispositifs d'acquisition d'image (101) adjacents, des données chaudes dans la région de surveillance chevauchante comprend :
la division de la région de surveillance chevauchante d'un premier dispositif d'acquisition d'image (101) et d'un second dispositif d'acquisition d'image (101) en une pluralité de sous-régions chevauchantes, le premier dispositif d'acquisition d'image (101) et le second dispositif d'acquisition d'image (101) étant n'importe quelle paire des dispositifs d'acquisition d'image (101) adjacents ;
l'obtention de premières données chaudes dans une première sous-région chevauchante à partir des données chaudes dans la première sous-région de surveillance, et
l'obtention de secondes données chaudes dans la première sous-région chevauchante à partir des données chaudes dans la seconde sous-région de surveillance, la première sous-région chevauchante étant n'importe laquelle de la pluralité de sous-régions chevauchantes ;
la détermination d'une sous-région cible proche d'une position de la première sous-région chevauchante à partir de la première sous-région de surveillance et de la seconde sous-région de surveillance ;
la détermination d'une première dispersion entre les premières données chaudes et les données chaudes dans la sous-région cible, et la détermination d'une seconde dispersion entre les secondes données chaudes et les données chaudes dans la sous-région cible, dans lequel la première dispersion est une valeur absolue d'une différence entre une somme d'une pluralité de valeurs de luminosité incluses dans les premières données chaudes dans la première sous-région chevauchante et une somme d'une pluralité de valeurs de luminosité incluses dans les données chaudes dans une première région, et la seconde dispersion est une valeur absolue d'une différence entre une somme d'une pluralité de valeurs de luminosité incluses dans les secondes données chaudes dans la première sous-région chevauchante et la somme de la pluralité de valeurs de luminosité incluses dans les données chaudes dans la première région, ou, la première dispersion est une valeur absolue d'une différence entre une valeur moyenne d'une pluralité de valeurs de luminosité incluses dans les premières données chaudes dans la première sous-région chevauchante et une valeur moyenne d'une pluralité de valeurs de luminosité incluses dans les données chaudes dans la première région, et la seconde dispersion est une valeur absolue d'une différence entre une valeur moyenne d'une pluralité de valeurs de luminosité incluses dans les secondes données chaudes dans la première sous-région chevauchante et une valeur moyenne de la pluralité de valeurs de luminosité incluses dans les données chaudes dans la première région, dans lequel la première région indique une région formée par n rangées ou n colonnes de pixels dans la sous-région cible, les n rangées ou n colonnes commençant à partir d'une rangée ou d'une colonne de pixels la plus proche de la première sous-région chevauchante et vers une direction s'éloignant de la première sous-région chevauchante ; et
la détermination, selon la première dispersion et la seconde dispersion, de données chaudes dans la première sous-région chevauchante ; et
la détermination (304) de données chaudes dans la région globale sur la base des données chaudes dans chaque région de surveillance chevauchante et de données chaudes dans une région restante autre que la région de surveillance chevauchante correspondante de chaque dispositif d'acquisition d'image (101).

2. Procédé selon la revendication 1, dans lequel la détermination, pour chacun de la pluralité de dispositifs d'acquisition d'image (101) déployés dans la région globale, de la sous-région de surveillance du dispositif d'acquisition d'image (101) dans la région globale, comprend :
la détermination d'une plage de surveillance réelle d'un premier dispositif d'acquisition d'image (101), le premier dispositif d'acquisition d'image (101) étant n'importe lequel de la pluralité de dispositifs d'acquisition d'image (101) ; et
la détermination, sur la base de la plage de surveillance réelle et d'une position de montage réelle du premier dispositif d'acquisition d'image (101), de la sous-région de surveillance du premier dispositif d'acquisition d'image (101) dans la région globale ;
ou, la détermination, sur la base de la plage de surveillance réelle du premier dispositif d'acquisition d'image (101) et d'une position de montage du premier dispositif d'acquisition d'image (101) dans une carte de région globale, de la sous-région de surveillance du premier dispositif d'acquisition d'image (101) dans la carte de région globale, dans lequel la carte de région globale est une image correspondant à la région globale.

3. Procédé selon la revendication 2, dans lequel la détermination de la plage de surveillance réelle du premier dispositif d'acquisition d'image (101) comprend :
l'obtention d'un premier champ de vision et d'une première distance correspondant au premier dispositif d'acquisition d'image (101), la première distance étant une hauteur du premier dispositif d'acquisition d'image (101) par rapport au sol, ou la première distance étant une distance entre un point limite photographié par le premier dispositif d'acquisition d'image (101) au niveau du premier champ de vision et du premier dispositif d'acquisition d'image (101) ; et
la détermination, sur la base du premier champ de vision et de la première distance, de la plage de surveillance réelle du premier dispositif d'acquisition d'image (101).

4. Procédé selon la revendication 1, dans lequel la détermination, sur la base de la sous-région de surveillance de chaque dispositif d'acquisition d'image (101), de la région de surveillance chevauchante des sous-régions de surveillance des dispositifs d'acquisition d'image (101) qui sont adjacents, comprend :
l'obtention de coordonnées de chaque point de position dans une première sous-région de surveillance d'un premier dispositif d'acquisition d'image (101) et l'obtention de coordonnées de chaque point de position dans une seconde sous-région de surveillance d'un second dispositif d'acquisition d'image (101), le premier dispositif d'acquisition d'image (101) et le second dispositif d'acquisition d'image (101) étant n'importe quelle paire des dispositifs d'acquisition d'image (101) adjacents ; et
la détermination d'une région formée par des points de position avec les mêmes coordonnées dans la première sous-région de surveillance et la seconde sous-région de surveillance que la région de surveillance chevauchante du premier dispositif d'acquisition d'image (101) et du second dispositif d'acquisition d'image (101).

5. Procédé selon l'une quelconque des revendications 1 à 4, dans lequel la détermination de la sous-région cible proche de la position de la première sous-région chevauchante à partir de la première sous-région de surveillance et de la seconde sous-région de surveillance comprend :
la détermination de l'une d'une première région restante ou d'une seconde région restante qui est plus proche de la position de la première sous-région chevauchante que la sous-région cible, dans lequel la première région restante est une région restante dans la première sous-région de surveillance autre que la région de surveillance chevauchante et la seconde région restante est une région restante dans la seconde sous-région de surveillance autre que la région de surveillance chevauchante ; et
la détermination, selon la première dispersion et la seconde dispersion, des données chaudes dans la première sous-région chevauchante, comprenant :
si la première dispersion est supérieure à la seconde dispersion, la détermination des secondes données chaudes comme étant les données chaudes dans la première sous-région chevauchante ; ou
si la première dispersion est inférieure à la seconde dispersion, la détermination des premières données chaudes comme étant les données chaudes dans la première sous-région chevauchante.

6. Appareil de détermination de données chaudes dans une région globale (800), comprenant :
un premier module de détermination (801), pour déterminer, pour chacun d'une pluralité de dispositifs d'acquisition d'image (101) déployés dans la région globale, une sous-région de surveillance du dispositif d'acquisition d'image (101) dans la région globale ;
un deuxième module de détermination (802), pour déterminer, sur la base de la sous-région de surveillance de chaque dispositif d'acquisition d'image (101), une région de surveillance chevauchante des sous-régions de surveillance des dispositifs d'acquisition d'image (101) qui sont adjacents ;
un troisième module de détermination (803), pour déterminer, à partir de données chaudes dans les sous-régions de surveillance des dispositifs d'acquisition d'image (101) adjacents, des données chaudes dans la région de surveillance chevauchante, dans lequel les données chaudes dans une sous-région de surveillance correspondant à chaque dispositif d'acquisition d'image indiquent des données qui reflètent un nombre de personnes apparaissant dans la sous-région de surveillance et/ou des durées des personnes restant dans la sous-région de surveillance ;
dans lequel le troisième module de détermination (803) comprend :
un sous-module de division, pour diviser la région de surveillance chevauchante du premier dispositif d'acquisition d'image (101) et du second dispositif d'acquisition d'image (101) en une pluralité de sous-régions chevauchantes ; et
un sous-module de détermination, pour déterminer, selon une position de chaque sous-région chevauchante, à partir des données chaudes dans la première sous-région de surveillance du premier dispositif d'acquisition d'image (101) et des données chaudes dans la seconde sous-région de surveillance du second dispositif d'acquisition d'image (101), les données chaudes dans la sous-région chevauchante correspondante ;
dans lequel le sous-module de détermination est spécifiquement destiné à :
obtenir de premières données chaudes dans une première sous-région chevauchante à partir de données chaudes dans la première sous-région de surveillance, et obtenir de secondes données chaudes dans la première sous-région chevauchante à partir de données chaudes dans la seconde sous-région de surveillance, la première sous-région chevauchante étant n'importe laquelle de la pluralité de sous-régions chevauchantes ;
déterminer une sous-région cible proche d'une position de la première sous-région chevauchante à partir de la première sous-région de surveillance et de la seconde sous-région de surveillance ;
déterminer une première dispersion entre les premières données chaudes et les données chaudes dans la sous-région cible, et déterminer une seconde dispersion entre les secondes données chaudes et les données chaudes dans la sous-région cible ; et
déterminer, en fonction de la première dispersion et de la seconde dispersion, des données chaudes dans la première sous-région chevauchante ; dans lequel la première dispersion est une valeur absolue d'une différence entre une somme d'une pluralité de valeurs de luminosité incluses dans les premières données chaudes dans la première sous-région chevauchante et une somme d'une pluralité de valeurs de luminosité incluses dans les données chaudes dans une première région, et la seconde dispersion est une valeur absolue d'une différence entre une somme d'une pluralité de valeurs de luminosité incluses dans les secondes données chaudes dans la première sous-région chevauchante et la somme de la pluralité de valeurs de luminosité incluses dans les données chaudes dans la première région, ou, la première dispersion est une valeur absolue d'une différence entre une valeur moyenne d'une pluralité de valeurs de luminosité incluses dans les premières données chaudes dans la première sous-région chevauchante et une valeur moyenne d'une pluralité de valeurs de luminosité incluses dans les données chaudes dans la première région, et la seconde dispersion est une valeur absolue d'une différence entre une valeur moyenne d'une pluralité de valeurs de luminosité incluses dans les secondes données chaudes dans la première sous-région chevauchante et une valeur moyenne de la pluralité de valeurs de luminosité incluses dans les données chaudes dans la première région, dans lequel la première région indique une région formée par n rangées ou n colonnes de pixels dans la sous-région cible, les n rangées ou n colonnes commençant à partir d'une rangée ou d'une colonne de pixels la plus proche de la première sous-région chevauchante et vers une direction s'éloignant de la première sous-région chevauchante ;
un quatrième module de détermination (804), pour déterminer des données chaudes dans la région globale, sur la base des données chaudes dans chaque région de surveillance chevauchante et de données chaudes dans une région restante autre que la région de surveillance chevauchante correspondante de chaque dispositif d'acquisition d'image (101).

7. Appareil (800) selon la revendication 6, dans lequel le premier module de détermination (801) est spécifiquement destiné à :
déterminer une plage de surveillance réelle d'un premier dispositif d'acquisition d'image (101), le premier dispositif d'acquisition d'image (101) étant n'importe lequel de la pluralité de dispositifs d'acquisition d'image (101) ; et
déterminer, sur la base de la plage de surveillance réelle et d'une position de montage réelle du premier dispositif d'acquisition d'image (101), la sous-région de surveillance du premier dispositif d'acquisition d'image (101) dans la région globale ; ou,
déterminer, sur la base de la plage de surveillance réelle du premier dispositif d'acquisition d'image (101) et d'une position de montage du premier dispositif d'acquisition d'image (101) dans une carte de région globale, la sous-région de surveillance du premier dispositif d'acquisition d'image (101) dans la carte de région globale, dans lequel la carte de région globale est une image correspondant à la région globale ;
dans lequel le premier module de détermination (801) est spécifiquement destiné à :
obtenir un premier champ de vision et une première distance correspondant au premier dispositif d'acquisition d'image (101), la première distance étant une hauteur du premier dispositif d'acquisition d'image (101) par rapport au sol, ou la première distance étant une distance entre un point limite photographié par le premier dispositif d'acquisition d'image (101) au niveau du premier champ de vision et du premier dispositif d'acquisition d'image (101) ; déterminer, sur la base du premier champ de vision et de la première distance, la plage de surveillance réelle du premier dispositif d'acquisition d'image (101) ;
dans lequel le deuxième module de détermination (802) est spécifiquement destiné à :
obtenir des coordonnées de chaque point de position dans une première sous-région de surveillance du premier dispositif d'acquisition d'image (101) et obtenir des coordonnées de chaque point de position dans une seconde sous-région de surveillance d'un second dispositif d'acquisition d'image (101), le premier dispositif d'acquisition d'image (101) et le second dispositif d'acquisition d'image (101) étant n'importe quelle paire des dispositifs d'acquisition d'image (101) adjacents ; et
déterminer une région formée par des points de position avec les mêmes coordonnées dans la première sous-région de surveillance et la seconde sous-région de surveillance que la région de surveillance chevauchante du premier dispositif d'acquisition d'image (101) et du second dispositif d'acquisition d'image (101) ;
dans lequel le sous-module de détermination est spécifiquement destiné à :
déterminer l'une d'une première région restante ou d'une seconde région restante qui est plus proche de la position de la première sous-région chevauchante que la sous-région cible, dans lequel la première région restante est une région restante dans la première sous-région de surveillance autre que la région de surveillance chevauchante et la seconde région restante est une région restante dans la seconde sous-région de surveillance autre que la région de surveillance chevauchante ;
dans lequel le sous-module de détermination est en outre spécifiquement destiné à :
si la première dispersion est supérieure à la seconde dispersion, déterminer les secondes données chaudes comme étant les données chaudes dans la première sous-région chevauchante ; ou
si la première dispersion est inférieure à la seconde dispersion, déterminer les premières données chaudes comme étant les données chaudes dans la première sous-région chevauchante.

8. Dispositif informatique (102), **caractérisé en ce que** le dispositif informatique (102) comprend un processeur et une mémoire, dans lequel la mémoire est destinée à stocker un programme informatique et le processeur est destiné à exécuter le programme stocké dans la mémoire pour mettre en œuvre les étapes du procédé de détermination de données chaudes dans une région globale selon l'une quelconque des revendications 1 à 5.

9. Support de stockage lisible par ordinateur, **caractérisé par** un programme informatique stocké dans le support de stockage lisible par ordinateur, dans lequel le programme informatique, lorsqu'il est exécuté par un processeur, met en œuvre les étapes du procédé selon l'une quelconque des revendications 1 à 5.

10. Programme informatique qui, lorsqu'il est exécuté sur un dispositif informatique (102), amène le dispositif informatique (102) à réaliser les étapes du procédé selon l'une quelconque des revendications 1 à 5.

11. Produit de programme informatique, comprenant des instructions qui, lorsqu'elles sont exécutées sur un dispositif informatique (102), amènent le dispositif informatique (102) à réaliser les étapes du procédé selon l'une quelconque des revendications 1 à 5.
